# EUROPEAN PATENT APPLICATION

(11) **EP 4 529 081 A1**
(43) Date of publication of application: **26.03.2025**
(21) Application number: 23826400.6
(22) Date of filing: 20.06.2023
(51) Int. Cl.: H04L 9/32, H04W 12/069

(54) **COMMUNICATION METHOD AND APPARATUS**

(30) Priority: 20.06.2022 CN 202210699709; 19.08.2022 CN 202210998724
(71) Applicant: Huawei Technologies Co., Ltd., Shenzhen, Guangdong 518129 (CN)
(72) Inventor: SUN, Taoran, Shenzhen, Guangdong 518129 (CN); WU, Yizhuang, Shenzhen, Guangdong 518129 (CN); LI, Lun, Shenzhen, Guangdong 518129 (CN)
(74) Representative: Thun, Clemens
(86) International application number: PCT/CN2023/101302
(87) International publication number: WO 2023/246753

(57) **Abstract**

Embodiments of this application provide a communication method and apparatus. The method includes: A service discovery function network element receives a service discovery request message, where the service request message is used to request the service discovery function network element to provide a network function network element of a first type; and when determining that a first certificate of a first network function network element of the first type is valid, the service discovery function network element sends a service discovery response message including identification information of the first network function network element. According to the method disclosed in this application, verification on validity of a certificate owned by the first network function network element is added in a service discovery procedure, so that a network connection establishment failure caused by invalidation or revocation of the certificate of the first network function network element when a connection is established between a network function service consumer network element and the first network function network element subsequently can be avoided, thereby improving network efficiency and user experience.

## Description

### TECHNICAL FIELD

This application relates to the communication field, and more specifically, to a communication method and apparatus.

### BACKGROUND

Currently, in a service-based architecture (service based architecture, SBA), network function (network function, NF) network elements interact with each other based on a service-based interface, and establish a network connection by using a technology like internet protocol security (internet protocol security, IPSec) or transport layer security (transport layer security, TLS). These security technologies require that two parties that communicate with each other be configured with certificates. The certificates include keys and algorithms used by the two communication parties for verification, to reduce a security risk in network communication. In other words, a certificate needs to be deployed on each NF. Before performing communication, NFs need to complete bidirectional authentication based on certificates, to improve communication security.

For example, after obtaining, from a network function repository function (network function repository function, NRF) network element, information about a network function service producer (NF service producer, NFp) network element that can provide a service, a network function service consumer (NF service consumer, NFc) network element attempts to establish a connection to the NFp. Specifically, the NFc and the NFp exchange respective certificates with each other for verification. In this case, if the certificate of the NFp is invalidated or revoked, verification on the certificate of the NFp fails, and consequently, current network connection establishment fails. This affects network efficiency and reduces user experience.

### SUMMARY

This application provides a communication method and apparatus, to improve network efficiency and user experience.

According to a first aspect, a communication method is provided. The method may be performed by a service discovery function network element (for example, an NRF), or may be performed by a component (for example, a chip or a circuit) of a service discovery function network element. This is not limited in this application. For ease of description, an example in which the method is performed by the service discovery function network element is used for description below. The method includes: The service discovery function network element receives a service discovery request message, where the service request message is used to request the service discovery function network element to provide a network function network element of a first type; and when determining that a first certificate of a first network function network element of the first type is valid, the service discovery function network element sends a service discovery response message including identification information of the first network function network element.

It should be understood that, that the service request message is used to request the service discovery function network element to provide the network function network element of the first type may be understood as: The service request message is used to request the service discovery function network element to provide information about the network function network element of the first type, for example, an identifier of the first network function network element and/or configuration data of the first network function network element. This is not specifically limited in this application.

According to the solution provided in this application, validity of the first certificate of the first network function network element is verified, and information about the first network function network element is provided for a second network function network element when the verification succeeds, so that a case in which network connection establishment fails because the certificate of the first network function network element is invalid (for example, invalidated or revoked) in a process of establishing a network connection between the first network function network element and the second network function network element can be avoided or reduced, thereby improving network efficiency and user experience.

With reference to the first aspect, in some implementations of the first aspect, the determining that a first certificate of a first network function network element of the first type is valid includes: The service discovery function network element determines, based on a validity period of the first certificate, that the first certificate does not expire; and the service discovery function network element determines that the first certificate is not revoked.

Based on the foregoing solution, when the first certificate does not expire and the first certificate is not revoked, it is determined that the first certificate of the first network function network element of the first type is valid, and then the first network function network element of the first type is provided for a network function service consumer network element, to establish a network connection between the first network function network element and the network function service consumer network element.

With reference to the first aspect, in some implementations of the first aspect, that the service discovery function network element determines that the first certificate is not revoked includes: The service discovery function network element locally queries a certificate revocation list; and when the first certificate does not belong to the certificate revocation list, the service discovery function network element determines that the first certificate is not revoked.

Optionally, when the service discovery function network element does not find the certificate revocation list locally, the service discovery function network element determines that the first certificate is not revoked.

Based on the foregoing solution, the service discovery function network element may locally query the certificate revocation list to determine whether the first certificate is revoked, without a need to send a query request to an external server, thereby reducing signaling overheads and a communication latency, and improving network efficiency.

With reference to the first aspect, in some implementations of the first aspect, that the service discovery function network element determines that the first certificate is not revoked includes: The service discovery function network element sends a query request message to a server, where the query request message is used to query whether the first certificate is revoked; the service discovery function network element receives a query response message from the server, where the query response message includes an indication that the first certificate is not revoked; and the service discovery function network element determines, based on the indication, that the first certificate is not revoked.

It should be understood that the server is a server that deploys a certificate revocation list, and therefore, a certificate status of a certificate (whether the certificate is revoked) may be obtained by querying the server.

Based on the foregoing solution, the service discovery function network element may query the external server about whether the first certificate of the first network function network element is revoked currently. In this implementation, real-time accuracy of a certificate status of the first certificate is high.

With reference to the first aspect, in some implementations of the first aspect, the service discovery function network element receives a registration request message, where the registration request message is used to request to register the first network function network element with the service discovery function network element, the registration request message includes the first certificate, and the first certificate includes identification information of the first certificate and the validity period of the first certificate.

With reference to the first aspect, in some implementations of the first aspect, the service discovery function network element receives a connection establishment request message, where the connection establishment request message is used to request to establish a connection between the first network function network element and the service discovery function network element, the connection establishment request message includes the first certificate, and the first certificate includes identification information of the first certificate and the validity period of the first certificate.

With reference to the first aspect, in some implementations of the first aspect, when determining that the first certificate is valid, the service discovery function network element stores the first certificate; or when determining that the first certificate is valid, the service discovery function network element stores the identification information of the first certificate and the validity period of the first certificate.

Based on the foregoing solution, before a registration request of the first network function network element is received, it is ensured that the first certificate is valid, so that secure communication can be provided. This helps improve network efficiency and user experience in a subsequent process of establishing a network connection between the first network function network element and the second network function network element, and avoids, as much as possible, a case in which network connection establishment fails because the certificate of the first network function network element is invalidated or revoked.

With reference to the first aspect, in some implementations of the first aspect, the determining that the first certificate is valid includes: The service discovery function network element determines, based on a public key of the first network function network element and a public key of a certificate issuing network element, that the first certificate is a certificate issued by the certificate issuing network element to the first network function network element; the service discovery function network element determines, based on the validity period of the first certificate, that the first certificate does not expire; and the service discovery function network element determines that the first certificate is not revoked.

Based on the foregoing solution, authenticity (that is, the first certificate is issued by the certificate issuing network element to the first network function network element, and malicious tampering of the first certificate is avoided) and validity (the first certificate does not expire, and the first certificate is not revoked) of the first certificate are verified, to ensure security and availability of the first network function network element that receives a registration service. This helps successfully establish a network connection between the first network function network element and the second network function network element subsequently, and improve network efficiency.

Optionally, when determining that the first certificate in the registration request message is valid, the service discovery function network element may alternatively not store the first certificate, or may not store the identification information of the first certificate and the validity period of the first certificate. Therefore, based on this implementation, when receiving a service used to request to discover the network function network element of the first type, the service discovery function network element may send the identification information of the first network function network element of the first type to an external server, for example, a certificate revocation list server or an online certificate status protocol server, to request to obtain validity of the first certificate (query the validity period of the first certificate and query whether a certificate status is revoked). Further, the service discovery function network element determines, based on a response message fed back by the external server, whether to provide the identification information of the first network function network element for the second network function network element NFc. For example, if the external server feeds back that the first certificate is valid, the service discovery function network element provides the identification information of the first network function network element NFp for the second network function network element NFc.

With reference to the first aspect, in some implementations of the first aspect, after the service discovery function network element sends the service discovery response message including the identification information of the first network function network element, the service discovery function network element receives indication information, where the indication information indicates that the first certificate is revoked, and the indication information includes the identification information of the first certificate; and the service discovery function network element sends a notification message, where the notification message notifies that the first certificate of the first network function network element is revoked.

Based on the foregoing solution, the service discovery function network element may obtain the certificate status of the first certificate (whether the first certificate is revoked) in a relatively timely manner, and notify the second network function network element NFc in a timely manner. This can avoid a case in which network connection establishment fails because the first certificate is invalidated or revoked, thereby improving network efficiency and user experience.

With reference to the first aspect, in some implementations of the first aspect, the service discovery function network element receives a subscription request message, where the subscription request message is used to request to subscribe to a certificate status of the first certificate from the service discovery function network element.

Based on the foregoing solution, the service discovery function network element may notify, in a timely manner based on the subscription request message, the second network function network element, a proxy network element, or another NFc of an event about whether the first certificate is revoked. In other words, the second network function network element or the another NFc can effectively obtain the certificate status of the first certificate in real time, to ensure network efficiency of subsequent communication between network function network elements.

With reference to the first aspect, in some implementations of the first aspect, that the service discovery function network element receives indication information includes: The service discovery function network element receives the indication information from the certificate issuing network element.

Further, the service discovery function network element adds the first certificate to the certificate revocation list based on the indication information.

Based on the foregoing solution, the service discovery function network element may learn, in a timely manner through the certificate issuing network element, whether the first certificate is revoked, and update the certificate status of the first certificate in the certificate revocation list in a timely manner. This is real-time and effective.

With reference to the first aspect, in some implementations of the first aspect, after the service discovery function network element sends the service discovery response message including the identification information of the first network function network element, the service discovery function network element receives a deregistration request message from the first network function network element; and the service discovery function network element sends a notification message, where the notification message notifies that the first certificate of the first network function network element is invalid.

Based on the foregoing solution, the service discovery function network element may obtain the certificate status of the first certificate (whether the first certificate is revoked) in a relatively timely manner, and notify the second network function network element NFc in a timely manner. This can avoid a case in which network connection establishment fails because the first certificate is invalidated or revoked, thereby improving network efficiency and user experience.

With reference to the first aspect, in some implementations of the first aspect, the service discovery function network element receives a registration service update request message from the first network function network element, where the registration service update request message includes a second certificate, and the second certificate includes identification information of the second certificate and a validity period of the second certificate corresponding to the identification information of the second certificate; and when determining that the second certificate is valid, updates locally stored information about the first network function network element. Optionally, the second certificate (the validity period and the identification information) is stored in the service discovery function network element as an NFp context.

Based on the foregoing solution, a registration update request of the first network function network element is received, and a registration update service is provided when the second certificate is valid. This helps find the first network function network element in a subsequent service discovery procedure, to provide a service for a network function service consumer network element.

With reference to the first aspect, in some implementations of the first aspect, when determining that a first certificate of a third network function network element of the first type is invalid, the service discovery function network element sends the service discovery response message that does not include identification information of the third network function network element.

Based on the foregoing solution, when verification on validity of the first certificate of the third network function network element fails, the service discovery function network element does not provide information about the third network function network element for the second network function network element NFc, to avoid a subsequent network connection establishment failure, thereby improving network efficiency.

In addition, when determining that certificates of all network function network elements of the first type are invalid, the service discovery function network element sends the service discovery response message, to reject to provide the network function network element of the first type.

Based on the foregoing solution, when verification on validity of the certificates of all the network function network elements of the first type fails, the service discovery function network element rejects to provide a discovery service for the second network function network element NFc.

According to a second aspect, a communication method is provided. The method may be performed by a network function service consumer network element (for example, an NFc), or may be performed by a component (for example, a chip or a circuit) of a network function service consumer network element. This is not limited in this application. For ease of description, an example in which the method is performed by the network function service consumer network element is used for description below. The method includes: The network function service consumer network element sends a subscription request message, where the subscription request message is used to request to subscribe to a certificate status of a first certificate of a network function service producer network element from a service discovery function network element, and the network function service producer network element provides a service for the network function service consumer network element; and the network function service consumer network element receives a notification message, where the notification message notifies that the first certificate of the network function service producer network element is revoked or invalid.

According to the solution provided in this application, the service discovery function network element may notify, in a timely manner based on the subscription request message, the network function service consumer network element of an event about whether the first certificate is revoked. In other words, the network function service consumer network element can effectively obtain the certificate status of the first certificate of the network function service producer network element in real time, to ensure network efficiency of subsequent communication between network function network elements.

With reference to the second aspect, in some implementations of the second aspect, when determining that the network function service consumer network element fails to establish a connection to the network function service producer network element, the network function service consumer network element sends indication information, where the indication information indicates that the first certificate of the network function service producer network element is revoked, and the indication information includes identification information of the first certificate.

Optionally, when determining that the network function service consumer network element fails to establish a connection to the network function service producer network element, the network function service consumer network element sends first information, where the first information includes the first certificate and an invalidation indication of the first certificate, or the first information includes the identification information of the first certificate and an invalidation indication of the first certificate.

Based on the foregoing solution, the service discovery function network element may obtain the certificate status of the first certificate (whether the first certificate is revoked) of the network function service producer network element in a relatively timely manner, and notify another NFc in a timely manner. In other words, the network function service producer network element also requests an NRF to provide an NFc of a network function network element of a first type. This can avoid a case in which network connection establishment fails because the first certificate is invalidated or revoked, thereby improving network efficiency and user experience.

According to a third aspect, a communication method is provided. The method may be performed by a certificate issuing network element (for example, a CA/RA), or may be performed by a component (for example, a chip or a circuit) of a certificate issuing network element. This is not limited in this application. For ease of description, an example in which the method is performed by the certificate issuing network element is used for description below. The method includes: The certificate issuing network element determines that a first certificate of a first network function network element is revoked; and the certificate issuing network element sends indication information to a network repository function network element corresponding to the first network function network element, where the indication information indicates to add the first certificate to a certificate revocation list.

It should be noted that the indication information may further indicate that the first certificate is revoked, and the indication information includes identification information of the first certificate. In other words, the indication information and indication information that enables a receiver (for example, the network repository function network element NRF) to add the first certificate to the revocation list may be the same. This is not specifically limited in this application.

According to the solution provided in this application, based on the indication information sent by the certificate issuing network element, the service discovery function network element may obtain the certificate status of the first certificate (whether the first certificate is revoked) in a relatively timely manner, and notify a second network function network element NFc in a timely manner. This can avoid a case in which network connection establishment fails because the first certificate is invalidated or revoked, thereby improving network efficiency and user experience. In addition, based on the indication information sent by the certificate issuing network element, the service discovery function network element may learn, in a timely manner, whether the first certificate is revoked, and update the certificate status of the first certificate in the certificate revocation list in a timely manner. This is real-time and effective.

With reference to the third aspect, in some implementations of the third aspect, before the certificate issuing network element sends the indication information to the network repository function network element corresponding to the first network function network element, the certificate issuing network element determines the network repository function network element based on preconfigured information about the network repository function network element corresponding to the first network function network element.

According to a fourth aspect, a communication method is provided. The method may be performed by a first network function network element (for example, an NFp), or may be performed by a component (for example, a chip or a circuit) of a first network function network element. This is not limited in this application. For ease of description, an example in which the method is performed by the first network function network element is used for description below. The method includes: The first network function network element sends a registration request message, where the registration request message is used to request to register the first network function network element with a service discovery function network element, the registration request message includes a first certificate of the first network function network element, and the first certificate includes identification information of the first certificate and a validity period of the first certificate corresponding to the identification information of the first certificate; and the first network function network element receives a registration request response message.

According to the solution provided in this application, when sending the registration request message, the first network function network element uses the registration request message to carry the first certificate owned by the first network function network element, so that the service discovery network element verifies validity of the first certificate, and accepts a registration request when determining that the first certificate is valid, thereby ensuring that the first network function network element is authentic and available, and helping provide the secure and available first network function network element for a network function service consumer network element NFc in a subsequent service discovery procedure. This avoids a case in which network connection establishment fails because the certificate of the first network function network element is invalidated or revoked, thereby improving network efficiency.

With reference to the fourth aspect, in some implementations of the fourth aspect, the first network function network element sends a deregistration request message, where the deregistration request message is used to request to delete a context of the first network function network element from the service discovery function network element, and the deregistration request message includes an identifier of the first network function network element.

Based on the foregoing solution, the service discovery function network element may obtain a certificate status of the first certificate in a relatively timely manner (by using the deregistration request message), and notify a second network function network element NFc in a timely manner. This can avoid a case in which network connection establishment fails because the first certificate is invalidated, thereby improving network efficiency and user experience.

With reference to the fourth aspect, in some implementations of the fourth aspect, the first network function network element obtains a second certificate, where the second certificate includes identification information of the second certificate and a validity period of the second certificate corresponding to the identification information of the second certificate; and the first network function network element sends a registration service update request message to the service discovery function network element, where the registration service update request message is used to request the service discovery function network element to provide a registration update service, and the registration service update request message includes the second certificate.

Based on the foregoing solution, the service discovery function network element is requested to update registration, so that the first network function network element can be found in a subsequent service discovery procedure, to establish a connection to a network function service consumer network element and provide a service for a network function service consumer network element.

According to a fifth aspect, a communication method is provided. The method may be performed by a service discovery function network element (for example, an NRF), or may be performed by a component (for example, a chip or a circuit) of a service discovery function network element. This is not limited in this application. For ease of description, an example in which the method is performed by the service discovery function network element is used for description below. The method includes: The service discovery function network element receives a first service discovery request message, where the first service request message is used to request the service discovery function network element to provide a network function network element of a first type; the service discovery function network element sends a first service discovery response message including identification information of a first network function network element of the first type; the service discovery function network element receives a second service discovery request message, where the second service request message is used to request the service discovery function network element to provide a network function network element of the first type, and the second service discovery request message includes an identifier of the first network function network element and a reason why the first network function network element and a second network function network element fail to establish a connection; and the service discovery function network element sends a second service discovery response message including identification information of a third network function network element of the first type.

According to the solution provided in this application, the service discovery request message carries the identifier of the first network function network element and the reason why the first network function network element NFp and the second network function network element NFc fail to establish a connection, so that the service discovery function network element provides the second network function network element NFc with identification information of another network function network element of the first type other than the first network function network element NFp in a subsequent service discovery procedure. This avoids that the service discovery function network element repeatedly sends the identification information of the first network function network element, and consequently network connection establishment fails again, a communication latency is increased, and network efficiency is reduced.

According to a sixth aspect, a communication method is provided. The method may be performed by a second network function network element (for example, an NFc), or may be performed by a component (for example, a chip or a circuit) of a second network function network element. This is not limited in this application. For ease of description, an example in which the method is performed by the second network function network element is used for description below. The method includes: The second network function network element sends a first service discovery request message, where the first service request message is used to request a service discovery function network element to provide a network function network element of a first type; the second network function network element receives a first service discovery response message including identification information of a first network function network element of the first type; when determining that the first network function network element and the second network function network element fail to establish a connection, the second network function network element sends a second service discovery request message, where the second service request message is used to request the service discovery function network element to provide a network function network element of the first type, and the second service discovery request message includes an identifier of the first network function network element and a reason for a connection establishment failure; and the second network function network element receives a second service discovery response message including identification information of a third network function network element of the first type.

According to the solution provided in this application, the service discovery request message carries the identifier of the first network function network element and the reason why the first network function network element NFp and the second network function network element NFc fail to establish a connection, so that the service discovery function network element provides the second network function network element NFc with identification information of another network function network element of the first type other than the first network function network element NFp in a subsequent service discovery procedure. This avoids that the service discovery function network element repeatedly sends the identification information of the first network function network element, and consequently network connection establishment fails again, a communication latency is increased, and network efficiency is reduced.

With reference to the fifth aspect or the sixth aspect, in some implementations, the reason for the connection establishment failure includes one or more of the following: a certificate of the first network function network element expires; a certificate of the first network function network element is revoked; or routing of the first network function network element fails.

According to a seventh aspect, a communication apparatus is provided. The apparatus is configured to perform the method provided in the first aspect or the fifth aspect. Specifically, the communication apparatus may include a unit and/or module configured to perform the method provided in any one of the foregoing implementations of the first aspect or the fifth aspect.

In an implementation, the communication apparatus is a service discovery function network element. The transceiver module may be a transceiver or an input/output interface. The processing module may be at least one processor. Optionally, the transceiver may be a transceiver circuit. Optionally, the input/output interface may be an input/output circuit.

In another implementation, the communication apparatus is a chip, a chip system, or a circuit in a service discovery function network element. The transceiver module may be an input/output interface, an interface circuit, an output circuit, an input circuit, a pin, a related circuit, or the like on the chip, the chip system, or the circuit. The processing module may be at least one processor, a processing circuit, a logic circuit, or the like.

For beneficial effects of the method shown in the seventh aspect and the possible designs of the seventh aspect, refer to the beneficial effects in the first aspect or the fifth aspect and the possible designs of the first aspect or the fifth aspect.

According to an eighth aspect, a communication apparatus is provided. The apparatus is configured to perform the method provided in the second aspect or the sixth aspect. Specifically, the communication apparatus may include a unit and/or module configured to perform the method provided in any one of the foregoing implementations of the second aspect or the sixth aspect.

In an implementation, the communication apparatus is a second network function network element. The transceiver module may be a transceiver or an input/output interface. The processing module may be at least one processor. Optionally, the transceiver may be a transceiver circuit. Optionally, the input/output interface may be an input/output circuit.

In another implementation, the communication apparatus is a chip, a chip system, or a circuit in a second network function network element. The transceiver module may be an input/output interface, an interface circuit, an output circuit, an input circuit, a pin, a related circuit, or the like on the chip, the chip system, or the circuit. The processing module may be at least one processor, a processing circuit, a logic circuit, or the like.

For beneficial effects of the method shown in the eighth aspect and the possible designs of the eighth aspect, refer to the beneficial effects in the second aspect or the sixth aspect and the possible designs of the second aspect or the sixth aspect.

According to a ninth aspect, a communication apparatus is provided. The apparatus is configured to perform the method provided in the third aspect or the third aspect. Specifically, the communication apparatus may include a unit and/or module configured to perform the method provided in any one of the foregoing implementations of the third aspect or the third aspect.

In an implementation, the communication apparatus is a certificate issuing network element. The transceiver module may be a transceiver or an input/output interface. The processing module may be at least one processor. Optionally, the transceiver may be a transceiver circuit. Optionally, the input/output interface may be an input/output circuit.

In another implementation, the communication apparatus is a chip, a chip system, or a circuit in a certificate issuing network element. The transceiver module may be an input/output interface, an interface circuit, an output circuit, an input circuit, a pin, a related circuit, or the like on the chip, the chip system, or the circuit. The processing module may be at least one processor, a processing circuit, a logic circuit, or the like.

For beneficial effects of the method shown in the ninth aspect and the possible designs of the ninth aspect, refer to the beneficial effects in the third aspect or the third aspect and the possible designs of the third aspect or the third aspect.

According to a tenth aspect, a communication apparatus is provided. The apparatus is configured to perform the method provided in the fourth aspect or the fourth aspect. Specifically, the communication apparatus may include a unit and/or module configured to perform the method provided in any one of the foregoing implementations of the fourth aspect or the fourth aspect.

In an implementation, the communication apparatus is a first network function network element. The transceiver module may be a transceiver or an input/output interface. The processing module may be at least one processor. Optionally, the transceiver may be a transceiver circuit. Optionally, the input/output interface may be an input/output circuit.

In another implementation, the communication apparatus is a chip, a chip system, or a circuit in a first network function network element. The transceiver module may be an input/output interface, an interface circuit, an output circuit, an input circuit, a pin, a related circuit, or the like on the chip, the chip system, or the circuit. The processing module may be at least one processor, a processing circuit, a logic circuit, or the like.

For beneficial effects of the method shown in the tenth aspect and the possible designs of the tenth aspect, refer to the beneficial effects in the fourth aspect or the fourth aspect and the possible designs of the fourth aspect or the fourth aspect.

According to an eleventh aspect, a processor is provided, configured to perform the method provided in the foregoing aspects. Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a twelfth aspect, a computer-readable storage medium is provided. The computer-readable storage medium stores program code to be executed by a device, and the program code is used to perform the method provided in any one of the implementations of the first aspect to the fourth aspect.

According to a thirteenth aspect, a computer program product including instructions is provided. When the computer program product runs on a computer, the computer is enabled to perform the method provided in any one of the implementations of the first aspect to the fourth aspect.

According to a fourteenth aspect, a chip is provided. The chip includes a processor and a communication interface. The processor reads, through the communication interface, instructions stored in a memory, to perform the method provided in any one of the implementations of the first aspect to the fourth aspect.

Optionally, in an implementation, the chip further includes the memory. The memory stores a computer program or instructions. The processor is configured to execute the computer program or the instructions stored in the memory. When the computer program or the instructions are executed, the processor is configured to perform the method provided in any one of the implementations of the second aspect to the fourth aspect.

According to a fifteenth aspect, a communication system is provided, including a plurality of any communication apparatuses according to the seventh aspect to the tenth aspect.

According to a sixteenth aspect, a communication method is provided, including: A first network element obtains a certificate status of a certificate belonging to a network function network element; and the first network element determines a configuration manner of the network function network element when the certificate status is that the certificate is invalidated, where the configuration manner is one of the following manners: configuring the network function network element to be deregistered, or identifying the network function network element to be invalidated.

In an implementation, the first network element obtains, via a certificate revocation notification message, the certificate status of the network function network element, where the certificate revocation notification message includes indication information for indicating the certificate status or the certificate status.

In an implementation, that a first network element obtains a certificate status of a network function network element includes: The first network element receives the certificate revocation notification message from a certificate issuing network element, where the certificate revocation notification message further includes a network function network element identifier, and the network function network element identifier identifies the network function network element corresponding to the certificate. That the first network element determines a configuration manner of the network function network element when the certificate status is that the certificate is invalidated includes: Based on the network function network element identifier, the first network element configures the network function network element to be deregistered or identifies the network function network element to be invalidated.

In an implementation, that a first network element obtains a certificate status of a network function network element includes: The first network element receives the certificate revocation notification message from a certificate issuing network element, where the certificate revocation notification message further includes a service name, and the service name identifies a service corresponding to the certificate. That the first network element identifies the network function network element to be invalidated when the certificate status is that the certificate is invalidated includes: The first network element identifies the service corresponding to the network function network element to be invalidated based on the service name when the certificate status is that the certificate is invalidated.

In an implementation, the certificate revocation notification message further includes a certificate identity, and the certificate identity identifies the certificate; and that the first network element identifies the network function network element to be invalidated when the certificate status is that the certificate is invalidated includes: The first network element identifies a service corresponding to the function service network element to be invalidated based on the certificate identity when the certificate status is that the certificate is invalidated.

In an implementation, an invalidated state of the certificate is either revoked or suspended.

In an implementation, the first network element sends, to an OAM, the configuration manner determined by the first network element.

In an implementation, the first network element is a service discovery function network element or a certificate management network element.

According to a seventeenth aspect, a communication apparatus is provided. The apparatus is configured to perform the method provided in any one of the sixteenth aspect or the foregoing implementations of the sixteenth aspect. Specifically, the communication apparatus may include a unit and/or module configured to perform the method provided in any one of the foregoing implementations of the sixteenth aspect or the sixteenth aspect.

### BRIEF DESCRIPTION OF DRAWINGS

FIG. 1 is a diagram of a network architecture applicable to this application;
FIG. 2 is a diagram of a hierarchical structure of a PKI system;
FIG. 3 is a schematic flowchart of NF registration/registration update/deregistration;
FIG. 4 is a schematic flowchart of NF service discovery in different scenarios;
FIG. 5 is an example flowchart of a first communication method according to an embodiment of this application;
FIG. 6 is an example flowchart of a second communication method according to an embodiment of this application;
FIG. 7 is an example flowchart of a third communication method according to an embodiment of this application;
FIG. 8 is an example flowchart of a fourth communication method according to an embodiment of this application;
FIG. 9 is an example flowchart of a fifth communication method according to an embodiment of this application;
FIG. 10 is a diagram of a structure of a communication apparatus according to an embodiment of this application;
FIG. 11 is a diagram of a structure of another communication apparatus according to an embodiment of this application;
FIG. 12 is an example flowchart of a communication method according to an embodiment of this application;
FIG. 13 is an example flowchart of another communication method according to an embodiment of this application; and
FIG. 14 is an example flowchart of another communication method according to an embodiment of this application.

### DESCRIPTION OF EMBODIMENTS

The following describes technical solutions of this application with reference to accompanying drawings.

The technical solutions provided in this application may be applied to various communication systems, for example, a new radio (new radio, NR) system, a long term evolution (long term evolution, LTE) system, an LTE frequency division duplex (frequency division duplex, FDD) system, and an LTE time division duplex (time division duplex, TDD) system. This application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or other communication systems.

In a communication system, a part operated by an operator may be referred to as a public land mobile network (public land mobile network, PLMN), which may also be referred to as an operator network or the like. The PLMN is a network established and operated by a government or an operator approved by the government to provide a land mobile communication service for the public, and is mainly a public network in which a mobile network operator (mobile network operator, MNO) provides a mobile broadband access service for a user. The PLMN described in embodiments of this application may be specifically a network compliant with a requirement of the 3rd generation partnership project (3rd generation partnership project, 3GPP) standard, which is referred to as a 3GPP network for short. The 3GPP network usually includes but is not limited to a 5th generation (5th generation, 5G) mobile communication network, a 4th generation mobile communication network, and another future communication system, for example, a 6th generation mobile communication network.

For ease of description, the PLMN or the 5G network is used as an example for description in embodiments of this application.

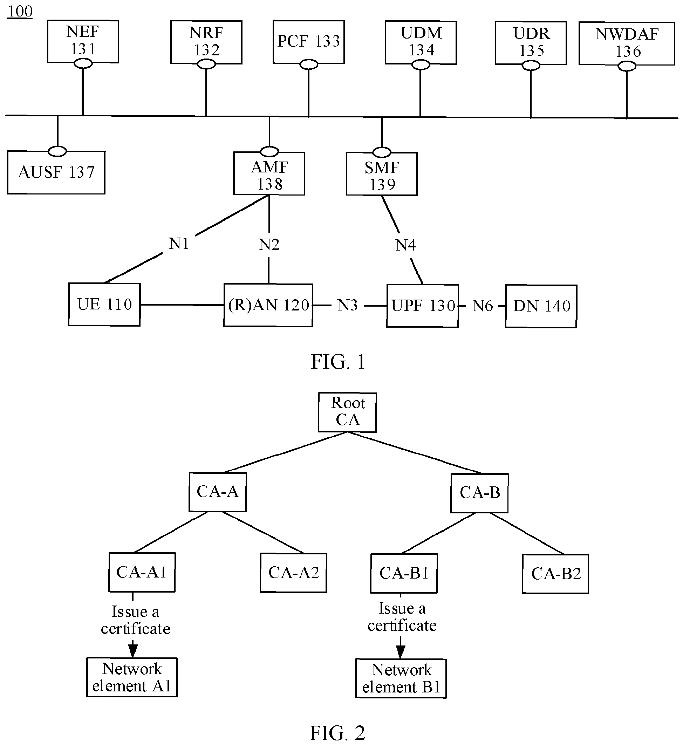

FIG. 1 is a diagram of a network architecture applicable to this application. A 5G network architecture based on a service-based architecture SBAin a non-roaming scenario defined in a 3GPP standardization process is used as an example. As shown in FIG. 1, the network architecture may include three parts: a terminal device part, a data network (data network, DN), and an operator network part. The following briefly describes a function of a network element of each part.

The terminal device part may include a terminal device 110, and the terminal device 110 may also be referred to as user equipment (user equipment, UE). The terminal device 110 in this application is a device having wireless sending and receiving functions, and may communicate with one or more core network (core network, CN) devices through an access network device (which may alternatively be referred to as an access device) in a radio access network (radio access network, RAN) 140. A type or the like of the terminal device is not limited in embodiments of this application. For ease of understanding, an example in which UE represents the terminal device is used for description below in this application.

The operator network part may include but is not limited to a (radio) access network ((radio) access network, (R)AN) 120 and a core network (core network, CN) part. The (R)AN 120 may be considered as a sub-network of an operator network, and is an implementation system between a service node in the operator network and the terminal device 110. To access the operator network, the terminal device 110 first passes through the (R)AN 120, and then may be connected to the service node in the operator network through the (R)AN 120. The access network device in embodiments of this application is a device that provides a wireless communication function for the terminal device 110, and may also be referred to as a network device. It should be understood that a specific type of the access network device is not limited in this specification. The CN part may include but is not limited to a user plane function (user plane function, UPF) 130, a network exposure function (network exposure function, NEF) 131, an NRF 132, a policy control function (policy control function, PCF) 133, a unified data management (unified data management, UDM) function 134, a unified data repository (unified data repository, UDR) function 135, a network data analytics function (network data analytics function, NWDAF) 136, an authentication server function (authentication server function, AUSF) 137, an access and mobility management function (access and mobility management function, AMF) 138, and a session management function (session management function, SMF) 139.

The DN 140 may also be referred to as a packet data network (packet data network, PDN), and is usually a network outside the operator network, for example, a third-party network. The DN refers to an operator network that provides a data transmission service for a user, for example, an IP multimedia service (IP multimedia service, IMS) or the Internet. The PLMN may access a plurality of DNs 140, and a plurality of services may be deployed on the DN 140, to provide services such as a data service and/or a voice service for the terminal device 110. The terminal device 110 may access the DN 140 through the operator network, and use an operator service deployed on the DN 140 and/or a service provided by a third party.

The following further briefly describes the NFs included in the CN.
1. The UPF 130 is a gateway provided by an operator, and is a gateway for communication between the operator network and the data network DN 140. The UPF network function 130 includes user plane functions such as data packet routing and transmission, data packet detection, service usage reporting, quality of service (quality of service, QoS) processing, lawful interception, uplink data packet detection, and downlink data packet storage.
2. The NEF 131 is a control plane function provided by an operator, mainly enables a third party to use a service provided by a network, and supports the network in exposing a capability of the network, event and data analysis, providing security configuration information for a PLMN from an external application, conversion of information exchanged inside and outside the PLMN, and the like.
3. The NRF 132 is a control plane function provided by an operator, and may be configured to maintain real-time information of a network function and a service in a network, for example, support network service discovery, maintain NF configuration data (NF profile) of an NF instance, support SCP service discovery, maintain SCP configuration data (SCP profile) of an SCP instance, send a notification related to a newly registered, deregistered, or updated NF and SCP, and maintain a health status of running of the NF and SCP.
4. The PCF 133 is a control plane function provided by an operator, and supports a unified policy framework to govern network behavior and provide subscription information related to a policy rule and policy decision for another control function.
5. The UDM 134 is a control plane function provided by an operator, and is responsible for storing information such as a subscriber permanent identifier (subscriber permanent identifier, SUPI) of a subscriber in an operator network, a generic public subscription identifier (generic public subscription identifier, GPSI) of the subscriber, a credential (credential), and the like.
6. The UDR 135 is a control plane function provided by an operator, and provides a function of storing and obtaining subscription data for a UDM, provides a function of storing and obtaining policy data for a PCF, stores and obtains NF group ID (group ID) information of a user, and the like.
7. The NWDAF 136 is a control plane function provided by an operator. A main function of the NWDAF 136 is to collect data from an NF, an external application function (application function, AF), an operation, administration and maintenance (operation, administration and maintenance, OAM) system, and the like, and provide the NF and the AF with NWDAF service registration, data exposure, data analysis, and the like.
8. The AUSF 137 is a control plane function provided by an operator, and is usually used for authentication between the terminal device 110 (a subscriber) and an operator network. After receiving an authentication request initiated by the subscriber, the AUSF network function 137 may perform authentication and/or authorization on the subscriber by using authentication information and/or authorization information stored in the UDM network function 134, or generate authentication information and/or authorization information of the subscriber by using the UDM network function 134. The AUSF network function 137 may feed back the authentication information and/or the authorization information to the subscriber.
9. The AMF 138 is a control plane network function provided by an operator network, and is responsible for access control and mobility management when the terminal device 110 accesses the operator network, for example, including functions such as mobility status management, allocation of a temporary user identity, and user authentication and authorization.
10. The SMF 139 is a control plane network function provided by an operator network, and is responsible for managing a protocol data unit (protocol data unit, PDU) session of the terminal device 110. The PDU session is a channel for transmitting a PDU, and the terminal device and the data network DN 140 need to transmit PDUs to each other through the PDU session. The SMF network function 139 is responsible for establishment, maintenance, deletion, and the like of the PDU session. The SMF network function 139 includes session functions such as session management (for example, session establishment, modification, and release, including tunnel maintenance between the user plane function UPF 130 and the (R)AN 120), selection and control of the UPF network function 130, service and session continuity mode selection, and roaming.

It may be understood that the foregoing network elements or functions may be physical entities in a hardware device, software instances running on dedicated hardware, or virtualized functions instantiated on a sharing platform (for example, a cloud platform). In short, an NF may be implemented by hardware or software.

For ease of description, in embodiments of this application, a network function (such as the NEF 131, ..., and the SMF 139) is collectively/briefly referred to as an NF. In other words, the NF described below in embodiments of this application may be replaced with any network function. In addition, FIG. 1 describes only some network functions as an example, and the NF described below is not limited to the network functions shown in FIG. 1.

It should be understood that the foregoing network architecture applied to embodiments of this application is merely a network architecture described from a perspective of a service-based architecture, and a network architecture applicable to embodiments of this application is not limited thereto. Any network architecture that can implement functions of the foregoing network elements is applicable to embodiments of this application.

It should be further understood that the AMF, the SMF, the UPF, the NEF, the AUSF, the NRF, the PCF, and the UDM shown in FIG. 1 may be understood as network elements configured to implement different functions in a core network, for example, may be combined as required to form a network slice. These core network elements may be independent devices, or may be integrated into a same device to implement different functions. A specific form of the foregoing network elements is not limited in this application.

It should be further understood that the foregoing names are defined merely for distinguishing between different functions, and should not constitute any limitation on this application. This application does not exclude a possibility of using other names in a 5G network and other networks in the future. For example, in a 6G network, some or all of the foregoing network elements may still use terms in 5G, or may use other names.

For ease of understanding the technical solutions of this application, related terms or technologies are first briefly described.
1. Asymmetric encryption algorithm, digital signature, and signature verification

The asymmetric encryption algorithm requires both a public key and a private key during use. The public key corresponds to the private key. If the public key is used during data encryption, only the corresponding private key can be used for decryption. On the contrary, if the private key is used during data encryption, only the public key corresponding to the private key can be used for decryption. An encryption process using the asymmetric encryption algorithm is as follows: A party A first generates a pair of keys and uses one of the keys as a public key. A party B obtaining the public key uses the key to encrypt information to be encrypted and then sends encrypted information to the party A. The party A uses the other corresponding private key to decrypt the encrypted information. In this way, confidential data transmission is implemented. Another encryption process using the asymmetric encryption algorithm is as follows: A party A uses a private key of the party A to encrypt information and then sends encrypted information to a party B. The party B uses a public key provided by the party A to decrypt the encrypted information. If the decryption succeeds, it can be verified that the information is sent by the party A instead of being forged by others. This is a common digital signature technology.

The digital signature is application of an asymmetric cryptography (asymmetric cryptography) technology. Asymmetric cryptography is a type of cryptographic algorithm. In such a cryptographic method, a pair of keys is required, where one is a private key (usually referred to as a private key), and the other is a public key (usually referred to as a public key). The two keys are mathematically related. Usually, one is used as an encryption key, and the other is used as a decryption key. Information encrypted by using the encryption key can be decrypted only by using the decryption key corresponding to the encryption key. Therefore, an owner of the private key can encrypt information by using the private key, to ensure integrity and accuracy of the information. The information encrypted by using the private key is referred to as a digital signature, which is referred to as a signature for short.

The digital signature has the following features: (1) Anti-forgery (counterfeiting): The private key is known by only a signer. Therefore, others cannot construct the correct private key. (2) Identity authentication: As mentioned above, the digital signature cannot be counterfeited by others. Therefore, a receiver can perform authentication on an identity claimed by a sender. (3) Anti-tampering (anti-damage of information integrity): For the digital signature, the signature and an original file form mixed and integrated data and cannot be tampered with, to ensure data integrity. (4) Anti-replay: In the digital signature, if technologies such as adding a sequence number and a timestamp to a signature packet are used, a replay attack can be avoided. (5) Anti-repudiation: As mentioned above, the digital signature can be used to perform authentication on an identity and cannot be counterfeited. Therefore, provided that a signed packet is preserved, it is equivalent that a manually signed contract text is preserved, that is, evidence is preserved, and a signer cannot repudiate. (6) Confidentiality (privacy): With confidentiality guarantee, an interception attack fails. A manually signed document (like a text) is not confidential. Once the document is lost, information in the document is likely to be disclosed. The digital signature can be used to encrypt a message to be signed, and certainly, if the signed message does not require confidentiality, the message may not be encrypted.

Signature check means that an information receiver uses a public key to verify whether data or a file released by an owner of a private key is complete and whether an information source is accurate. For example, the owner of the private key encrypts to-be-sent data (or digest information of the to-be-sent data) by using the private key, and then sends the to-be-sent data and a ciphertext to the receiver, where the ciphertext is a signature of the data. The receiver decrypts the ciphertext by using the public key, and verifies whether data obtained through decryption is consistent with the data received by the receiver from the owner of the private key (or digest information generated based on the received data). If the data is consistent, the verification succeeds, it indicates that received data information is complete and accurate, and it may be determined that the data is sent by the owner of the private key. In this application, signature check may also be referred to as signature verification, and a verification success may also be referred to as a check success.

2. Public key infrastructure (public key infrastructure, PKI), certificate, and certificate authority

The PKI is used to implement functions such as generation, management, storage, distribution, and revocation of a key and a digital certificate (certificate) based on public and private keys. The public key and the private key are separately used for encryption and digital signature generation. The public key can be sent to a network, and the private key needs to be stored in an owner. The digital certificate is digital authentication information used to identify an identity of a party and ownership of a public key in digital communication. In this application, the digital certificate may also be referred to as a certificate for short. In short, the certificate is used to identify an identity of a user, and the PKI is used to issue an identity certificate and verify validity of the identity certificate.

A typical PKI system includes one or more certificate authorities (certificate authority, CA). The CA is responsible for managing an entire life cycle of a public key, including issuing a certificate, defining a certificate validity period, and revoking a certificate. It should be noted that the CA may further include a registration authority (registration authority, RA), and the RA is configured to make a certificate issuing request to the CA after obtaining and authenticating a user identity. The RA may be a function integrated into the CA, or may be independently deployed. In this application, it is assumed that the CA integrates a function of the RA. To facilitate certificate management, a hierarchical structure of the PKI system uses a tree-like structure. A tree-like PKI architecture has the following features: (1) As a trusted endpoint of all network elements, a root CA needs to be in an absolutely secure position, to ensure security isolation and minimize communication interaction. (2) Application ranges of certificates may be divided by using a plurality of levels of CAs. For example, network elements in different areas use different leaf CAs to deliver certificates, or network elements used for a public service and a private service use different leaf CAs to deliver certificates. (3) When a leaf CA is attacked, the entire PKI architecture does not fail or break down. This facilitates stability of the entire PKI system.

FIG. 2 is a diagram of a hierarchical structure of a PKI system. In a PKI architecture, whether any two network elements can trust each other depends on whether certificates owned by the network elements are issued by a common trusted endpoint. As shown in FIG. 2, the common trusted endpoint is a root CA. A plurality of levels of leaf CAs (for example, others CA other than the root CA in FIG. 2) are subordinate to the root CA based on a deployment status. The root CA is responsible for issuing certificates to the root CA (self-signed certificate) and a next-level leaf CA (for example, a CA-A and a CA-B in FIG. 2). The next-level leaf CA issues a certificate to a next-level CA. For example, next-level CAs of the CA-A are a CA-A1 and a CA-A2. By analogy, finally, a last-level leaf CA issues a certificate to a network element. For example, a CA-B1 issues a certificate to a network element B1.

Specifically, a procedure in which a user requests a leaf CA to issue a certificate is as follows: (1) The user locally generates a public key and a private key that are paired, and sends the public key and identity information of the user to the CA. (2) The CA determines whether to agree to issue the certificate to the user. Issuance may be agreed after verification on the user identity, the public key, and the private key succeeds. For example, the user sends an initial credential and a private key signature to the CA. The CA verifies the initial credential to determine a user identity, uses the public key to verify the private key signature, and may issue the certificate when determining that the public-private key pair belongs to the user. If the CA agrees, the CA generates the certificate and uses a private key of the CA to generate a digital signature for the certificate. The certificate has at least information shown in Table 1. (3) The user obtains, from the CA, the certificate issued by the CA for the user, and obtains, from the CA, certificate chain information and an address for querying certificate revocation information. The address for querying certificate revocation may be a certificate revocation list (certificate revocation list, CRL) or an online certificate status protocol (online certificate status protocol, OCSP) for querying and recording certificate revocation information. A certificate chain is used to sequentially display a bottom-level leaf CA to the root CA, to show another network element how to sequentially find a common trusted endpoint. For example, certificates of a network element A1 and a network element B1 in FIG. 2 are issued by a CA-A1 and a CA-B1 respectively. The certificates of the network element A1 and the network element B1 cannot independently display a common trusted endpoint, and a certificate chain needs to be used to display the common trusted endpoint (for example, the root CA). A certificate chain of the network element A1 is {CA-A1 certificate, CA-A certificate, root CA certificate}, and a certificate chain of the network element B1 is {CA-B1 certificate, CA-B certificate, root CA certificate}.

**Table 1**

| Information name | Information function |
|---|---|
| Certificate identity (identity, ID) | Identity information of a certificate |
| ID of a CA that issues the certificate | Identity information of the CA that issues the certificate |
| ID of a certificate owner | Identity information of the certificate owner |
| Public key of the certificate owner | Public key information of the certificate owner, where a message receiver receives the certificate and uses the public key to verify a digital signature of a message |
| Certificate validity period | Time period in which the certificate is valid, where the certificate is invalidated after the time period |
| Certificate signature | The CA that issues the certificate uses a CA private key for digital signature information of the certificate |

### 3. CA in a core network

The core network defines different types of certificate authorities, including but not limited to a security gateway (security gateway, SEG) CA, a network element (network element, NE) CA, a transport layer security (transport layer security, TLS) client CA, a TLS server CA, and an interconnection (interconnection) CA.
(1) SEG CA: is a CA that issues a terminal entity certificate to an SEG in a specific operator domain, and is configured to interact with an SEG in another domain or interact with a network element in a domain of the SEG CA.
(2) NE CA: is a CA that issues a terminal entity IPsec certificate to a network element in a specific operator domain. A certificate issued by the NE CA should be limited to a Zb interface. The NE CA is configured to interact with another NE or an SEG.
(3) TLS client CA: is a CA that issues a terminal entity TLS client certificate to a TLS entity in a specific operator domain, and is configured to establish a TLS connection between a client (client) and a server (server).
(4) TLS server CA: is a CA that issues a terminal entity TLS server certificate to a TLS entity in a specific operator domain.
(5) Interconnection CA: is a CA that represents a specific operator to issue cross-certificates to an SEG and a TLS entity of the operator and an interconnected SEG CA, TLS client CA, and TLS server CA in another domain.

It should be understood that, unless an operator chooses to merge CAs, each security domain has at least one SEG CA, NE CA, TLS client CA, or TLS server CA and one dedicated interconnection CA.

### 4. NF configuration data (NF Profile)

The NF profile is generated by an operation, administration and maintenance (operation, administration and maintenance, OAM) and configured for an NF. The NF profile includes but is not limited to the following parameters: a network element identifier (for example, an NF ID (identity (Identity) or identifier (Identifier)), or an NF instance (Instance) ID), a network element type (NF type), a fully qualified domain name (fully qualified domain name, FQDN)/IP address (IP address), a slice and a service supported by the network element, location information of the NF, a home network identifier PLMN ID of the NF, NF-dedicated service authorization information, or the like. The NF instance ID, the NF type, the FQDN/IP address, and the like can all be used to apply for a certificate.

### 5. Certificate revocation list CRL and online certificate status protocol OCSP

The CRL is a list with a timestamp, includes information about all revoked or suspended digital certificates, and further includes two fields: a current update date and a next update date, of the CRL. Based on information about the two dates, a user may determine whether a currently owned CRL is the latest, and manage a CRL buffer. That is, the user can always use the original CRL buffer before the CRL is updated next time. The CRL includes a digital signature of a CA. Therefore, the CRL can be stored on any node on a network, for example, an NRF.

In a CRL solution, an updated CRL is periodically released to a lightweight directory access protocol (lightweight directory access protocol, LDAP) directory server, so that a relying party obtains a current status of a certificate. The relying party may determine, based on whether the CRL includes a certificate to be checked, whether a status of the certificate is revoked or not revoked. If the CRL includes a checked certificate, it indicates that the certificate is revoked. If the CRL does not include a checked certificate, it indicates that the certificate is not revoked. Specific implementation steps include: obtaining a corresponding CRL, checking whether a digital signature of a CA in the CRL is valid, and checking whether a to-be-checked certificate is in the CRL. A status of the certificate in the CRL includes "revoked" or "suspended". "Revoked" indicates that the certificate is revoked irreversibly. For example, the certificate is issued by an improper certificate authority, or a private key of the certificate is considered to be damaged or stolen. That is, the private key of the certificate is no longer owned by only the user. "Suspended" indicates that the certificate is suspended reversibly, and can continue to be used after the certificate is recovered.

The OCSP is an online certificate query interface, and establishes a real-time response mechanism. A browser sends a certificate query request to a CA server, and then the CA server responds in real time to verify whether a certificate is valid. In this way, validity of each certificate can be queried in real time, so that a real-time problem of the CRL is resolved.

In a core network based on a service-based architecture SBA, NFs on a control plane interact with each other based on a service-based interface. In other words, any two NFs are physically connected, and may directly or indirectly interact with each other by using another NF (for example, a service communication proxy SCP). That is, one NF invokes a service provided by another NF. To ensure security of NF interaction in a network, in a 5G network, each NF (for example, an NFc or an NFp) needs to obtain authorization from an NRF before interacting with another NF.

In a possible implementation, the NF may obtain authorization from the NRF by performing a registration procedure with the NRF. For example, the NF initiates registration with the NRF after instantiation, to register NF configuration data with the NRF, so that another NF network element can discover the NF in a service discovery procedure.

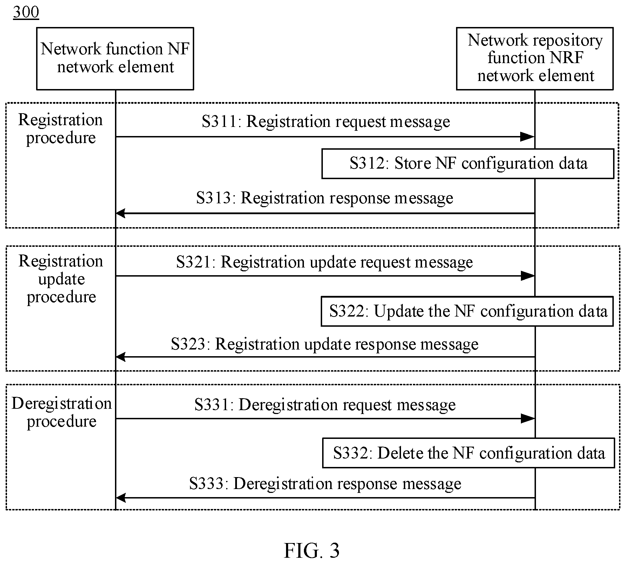

FIG. 3 is a schematic flowchart of NF registration/registration update/deregistration 300. Steps S311 to S313 are an NF registration procedure, steps S321 to S323 are an NF registration update procedure, and steps S331 to S333 are an NF deregistration procedure. As shown in FIG. 3, the following plurality of steps are specifically included.

S311: An NF (for example, an NFp) sends a registration request (Nnrf_NFManagement_NFRegister Request) message to an NRF.

Correspondingly, the NRF receives the registration request message from the NF.

The registration request message includes configuration data of the NF (NF Profile), and the NF profile includes an identifier of the NF, for example, an NF instance identifier (Instance ID).

Optionally, the NF profile may further include other information, for example, a parameter such as an NF type or a slice and a service supported by the NF. For example, the NFp requests registration with the NRF. Configuration data of the NFp may further include specific NFp resources or specific operations that can be used for NFcs of different types (for example, an SMF or an AMF) or NFcs with different instance IDs.

To ensure security of information exchange between the NF and the NRF, registration information exchange may comply with an OAuth 2.0 standard authorization framework formulated by the Internet Engineering Task Force (Internet Engineering Task Force, IETF). In OAuth 2.0, a client (client) corresponds to the NF, a client ID corresponds to the NF instance ID, and an authorization server (authorization server) corresponds to the NRF.

S312: The NRF (namely, the authorization server) stores the configuration data of the NF.

For example, if the NRF accepts the registration request of the NFp, the NRF stores an NFp profile, and marks the NFp to be available.

It should be noted that the NRF may verify the request before accepting NF registration.

Specifically, based on the OAuth authorization framework, the NRF determines, by verifying whether information about the registration request is authentic and valid, whether to accept the request of the NF. The OAuth authorization framework does not restrict a specific verification method used by the NRF. For example, the NFp may obtain a digital certificate in advance, where the certificate is issued by the NRF or another network element; and describe a valid profile of the NFp in the certificate. The NRF uses a public key of an issuer (the NRF or another network element) to verify authenticity of the digital certificate, to determine authenticity of content in the certificate. For another example, the NFp may alternatively obtain, in advance, an NFp profile signed by the NRF or another network element, and the NRF verifies authenticity of the signature by using a public key of a signer, to determine authenticity of the NFp profile. The NFp and the NRF may alternatively use another pre-agreed credential (credentials) or method (such as a password or a shared key), to enable the NRF to verify authenticity of the NFp profile. This is not limited in this application. Further, if a certificate is a digital certificate, the NRF may further check whether a parameter in a profile described by the certificate is consistent with a parameter in the NFp profile in the registration request message.

S313: The NRF sends a registration response (Nnrf_NFManagement_NFRegister Response) message to the NF.

Correspondingly, the NF receives the registration response message from the NRF.

The registration response message notifies the NF that service registration succeeds (or fails).

S321: The NF (for example, the NFp) sends a registration update request (Nnrf_NFManagement_NFUpdate Request) message to the NRF.

Correspondingly, the NRF receives the registration update request message from the NF.

The registration update request message includes to-be-updated configuration data (for example, a new service capacity) of the NF, and is used to request the NRF to update a previously stored NF profile.

S322: The NRF updates the configuration data of the NF.

For example, if the NRF accepts the registration update request of the NFp, the NRF updates the stored NFp profile.

S323: The NRF sends a registration update response (Nnrf_NFManagement_NFUpdate Response) message to the NF.

Correspondingly, the NF receives the registration update response message from the NRF.

S331: The NF (for example, the NFp) sends a deregistration request (Nnrf_NFManagement_NFDeregister Request) message to the NRF.

Correspondingly, the NRF receives the deregistration request message from the NF.

The deregistration request message notifies the NRF that the NF is unavailable.

For example, a deregistration reason may be that the NFp is destroyed, or the NFp needs to register with another NRF due to a network plan change, or the NF is unavailable when the NRF is to be disabled or disconnected from a network.

S332: The NRF deletes the configuration data of the NF.

For example, the NRF may delete the NFp profile according to an NFp management policy, and mark the NFp to be unavailable.

S333: The NRF sends a deregistration response (Nnrf_NFManagement_NFDeregister Response) message to the NF.

Correspondingly, the NF receives the deregistration response message from the NRF.

It should be noted that the NFp registration/registration update/deregistration procedure provided above is merely an example, and this application is not limited thereto. Other methods and processes that can implement NF registration all fall within the protection scope of this application.

In another possible implementation, the NF may obtain authorization from the NRF by performing a service discovery procedure with the NRF. To be specific, before requesting a service from another NF, the NF requests, from the NRF, information about the NF that can provide the service. For example, an AMF requests, from the NRF, information about an SMF that can provide a PDU session for UE.

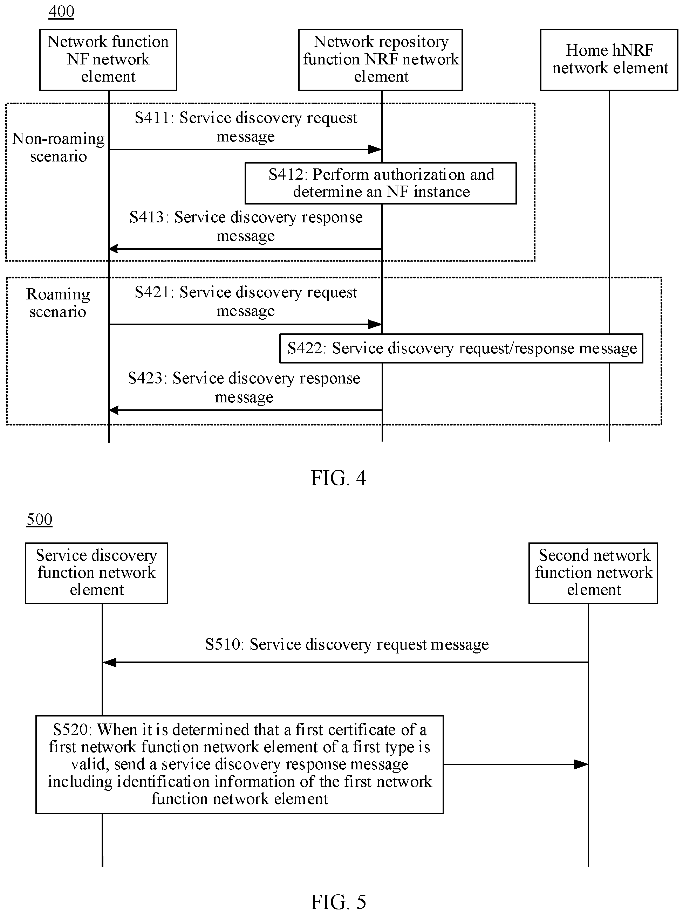

FIG. 4 is a schematic flowchart of NF service discovery 400 in different scenarios. Steps S411 to S413 are an NF service discovery procedure in a non-roaming scenario, that is, an NF and an NRF belong to a same serving PLMN. Steps S421 to S423 are an NF service discovery procedure in a roaming scenario, that is, an NF and an NRF belong to different serving PLMNs. As shown in FIG. 4, the following plurality of steps are specifically included.

S411: The NF (for example, an NFc) sends a service discovery request (Nnrf_NFdiscovery_Request) message to the NRF.

Correspondingly, the NRF receives the service discovery request message from the NF.

The service discovery request message is used by the NFc to request to discover an expected NFp instance, and the service discovery request message includes an expected NFp service name, an NF type of the expected NFp instance, and an NF type of the NFc.

For example, the NFc discovers an available service in a PLMN network based on a service name (for example, establishing a PDU session) and a target NF type (for example, SMF).

Optionally, the service discovery request message further includes a producer NF set ID, an NF service set ID, an SUPI, a dataset identifier, an external group ID (used for UDM and UDR discovery), a routing indicator of UE, a home network public key identifier (used for UDM and AUSF discovery), S-NSSAI, an NSI ID, and another service-related parameter.

For example, for SMF discovery, the service discovery request message may include an SMF area ID or an SMF set ID. For example, the service discovery request message includes indication information for an SMF location.

S412: The NRF authorizes Nnrf_NFdiscovery_Request, and determines an NFp instance expected by the NFc.

For example, the NRF determines, based on a profile of an expected NFp or NFp service and a type of the NFc, whether to allow the NFc to discover the expected NFp instance. If the expected NFp instance or NF service instance is deployed in a network slice, the NRF authorizes the discovery request based on a network slice discovery configuration. For example, the expected NFp instance can be discovered by only an NFc in a same network slice.

Further, the NRF determines, based on parameters such as a service name, a home network, or an expected NFp set included in the request sent by the NFc, an NFp instance set that matches the service discovery request message and an NRF internal policy.

It should be understood that there may be one or more NFps determined by the NRF. This is not specifically limited in this application.

S413: The NRF sends a service discovery response (Nnrf_NFdiscovery_Response) message to the NF.

Correspondingly, the NF receives the service discovery response message from the NRF.

The service discovery response message includes information about the NFp instance set, for example, an NFp profile.

It should be noted that, if the NFc provides a preferred target NFp location, the NRF should not limit a set of discovered NFp instances or NFp service instances to the target NFp location. For example, if an NFp instance or an NFp service instance cannot be found for the preferred target NFp location, the NRF may provide an NFp instance or an NFp service instance whose location is not the preferred target NFp location.

S421: The NF (for example, an NFc) sends a service discovery request message to the NRF.

Correspondingly, the NRF receives the service discovery request message from the NF.

The service discovery request message is used by the NFc to request to discover an expected NFp instance, and the service discovery request message includes an expected NFp service name, an NF type of the expected NFp instance, a home PLMN ID, a serving PLMN ID, or an NF type of the NFc.

Optionally, the service discovery request message further includes a producer NF set ID, an NF service set ID, S-NSSAI, an NSI ID, and another service-related parameter.

S422: The NRF exchanges the service discovery request message with a home hNRF, to obtain an NFp profile of an NFp instance.

For example, an NRF in a serving PLMN identifies the hNRF in a home PLMN based on a home PLMN ID, and forwards the service discovery request message of the NFc to the hNRF, to obtain the NFp profile of the expected NFp instance deployed in the home PLMN. Because the NRF in the serving PLMN triggers a service discovery request on behalf of the NFc, the NRF in the serving PLMN should not replace information about the NFc. Alternatively, the hNRF may query the hPLMN for an appropriate local NRF based on input information received from the NRF of the serving PLMN. An FQDN of the local NRF or an endpoint address of an NF discovery service of the local NRF in the hPLMN may be configured in the hNRF, or may need to be discovered based on the input information.

Further, the NRF determines an NFp instance set that matches the service discovery request message and an NRF internal policy, and sends the NFp instance set to the NRF.

S423: The NF sends a service discovery response message to the NRF.

Correspondingly, the NRF receives the service discovery response message from the NF.

The service discovery response message includes information about the NFp instance set, for example, an NFp profile.

It should be noted that the foregoing provided NF service discovery procedure is merely an example for description, and this application is not limited thereto. Other methods and processes that can obtain the expected NFp instance all fall within the protection scope of this application.

In conclusion, based on the foregoing NF registration procedure and service discovery procedure, the NRF may register the NFp based on the configuration data of the NFp, and provide the expected NFp instance or NFp service instance for the NFc. Further, the NFc needs to attempt to establish a network connection to the NFp. Specifically, if a certificate of the NFp is invalidated (for example, the certificate expires) or revoked (for example, the certificate does not expire but the certificate is revoked due to factors such as network management or leakage of a private key of the NFp), the connection between the NFc and the NFp fails to be established this time, thereby affecting network efficiency.

Further, after the NFc fails to establish a network connection to the NFp, the NFc may re-request the NFp for service discovery for an NFp. However, the NFc may still provide the same NFp for the NFc subsequently. As a result, network connection fails again, and a service process is affected.

That is, when an NF life cycle is inconsistent with a certificate life cycle, some security risks are exposed. For example, when the NF life cycle is longer than the certificate life cycle, after the certificate expires or is revoked, the NRF may still discover the NF in an NF service discovery process and provide the NF for the NFc. When the NFc establishes a TLS connection to the NFp, although the NFc can select another NFp, the connection between the NFc and the NFp may fail because the certificate of the NFp is invalid. However, a connection setting failure also affects network efficiency.

In view of this, this application provides a communication method and apparatus. Information about a certificate owned by an NFp is provided in an NFp registration procedure, and verification on validity of the certificate owned by the NFp is added in an NFc service discovery procedure, to avoid or reduce a possibility that network connection establishment fails because the certificate of the NFp is invalidated or revoked when a TLS connection is established between an NFc and the NFp subsequently, thereby improving network efficiency and user experience.

For ease of understanding embodiments of this application, the following points are described.

First, embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

Second, in embodiments of this application, "at least one" refers to one or more, and "a plurality of" refers to two or more. The term "and/or" describes an association relationship of associated objects, and indicates that three relationships may exist. For example, A and/or B may indicate the following three cases: Only A exists, both A and B exist, and only B exists. A and B may be singular or plural. In the text descriptions of this application, the character "/" usually indicates an "or" relationship between associated objects. "At least one of the following items (pieces)" or a similar expression thereof refers to any combination of these items, including a single item (piece) or any combination of a plurality of items (pieces). For example, at least one of a, b, and c may indicate a, b, c, a and b, a and c, b and c, or a, b, and c. Each of a, b, and c may be singular or plural.

Third, in embodiments of this application, "first", "second", and various numerical numbers (for example, #1 and #2) are merely used for distinguishing for ease of description, but are not intended to limit the scope of embodiments of this application, for example, distinguishing different messages or the like, rather than describing a particular order or sequence. It should be understood that objects described in such a way are interchangeable in an appropriate circumstance, so that a solution other than embodiments of this application can be described.

Fourth, in embodiments of this application, descriptions such as "when...", "in a case of...", and "if" all mean that a device performs corresponding processing in an objective case, and do not limit time, and the device is not required to perform a determining action during implementation. This does not mean that there is another limitation.

Fifth, in embodiments of this application, the terms "include", "have", and any variants thereof are intended to cover non-exclusive inclusion. For example, a process, method, system, product, or device including a series of steps or units is not necessarily limited to those clearly listed steps or units, but may include other steps or units that are not clearly listed or are inherent to the process, method, product, or device.

Sixth, in embodiments of this application, "indicate" may include "directly indicate" and "indirectly indicate". When a piece of indication information is described as indicating A, the indication information may directly indicate A or indirectly indicate A, but it does not mean that the indication information necessarily carries A.

Indication manners in embodiments of this application should be understood as covering various methods that can enable a to-be-indicated party to learn of to-be-indicated information. The to-be-indicated information may be sent as a whole, or may be divided into a plurality of pieces of sub-information for separate sending. In addition, sending periods and/or sending occasions of the sub-information may be the same or may be different. A specific sending method is not limited in this application.

The "indication information" in embodiments of this application may be an explicit indication, that is, directly indicated by signaling, or obtained with reference to another rule or another parameter or through derivation based on a parameter indicated by signaling; or may be an implicit indication, that is, obtained according to a rule or a relationship, or based on another parameter, or through derivation. This is not specifically limited in this application.

Seventh, in embodiments of this application, the "protocol" may be a standard protocol in the communication field, for example, may include a 5G protocol, a new radio (new radio, NR) protocol, and a related protocol applied to a future communication system. This is not limited in this application. "Preconfiguration" may include pre-definition, for example, definition in a protocol. "Pre-definition" may be implemented by pre-storing, in a device, corresponding code or a table, or may be implemented in another manner that may be used for indicating related information. A specific implementation of "pre-definition" is not limited in this application.

Eighth, in embodiments of this application, "storage" may mean storage in one or more memories. The one or more memories may be separately disposed, or may be integrated into an encoder or a decoder, a processor, or a communication apparatus. Alternatively, a part of the one or more memories may be separately disposed, and a part of the one or more memories may be integrated into a decoder, a processor, or a communication apparatus. A type of the memory may be a storage medium in any form. This is not limited in this application.

Ninth, in embodiments of this application, "communication" may also be described as "data transmission", "information transmission", "data processing", or the like. "Transmission" includes "sending" and "receiving". This is not limited in this application.

The technical solutions provided in this application are described in detail below with reference to the accompanying drawings.

FIG. 5 is a schematic flowchart of a first communication method 500 according to an embodiment of this application. As shown in FIG. 5, the method includes the following plurality of steps.

S510: A service discovery function network element receives a service discovery request message, where the service request message is used to request the service discovery function network element to provide a network function network element of a first type.

For example, the service discovery function network element receives the service discovery request message from a second network function network element (for example, a network function service consumer network element NFc); or the service discovery function network element receives the service discovery request message from a second network function network element through a proxy network element (for example, a communication proxy (service communication proxy, SCP)).

Optionally, in an inter-PLMN roaming scenario, the service discovery function network element (for example, an NRF 1) may alternatively receive the service discovery request message from another service discovery function network element (for example, an NRF 2).

It should be noted that, the service discovery request message may be understood as a message for invoking a service discovery request, and service discovery may be understood as follows: The service discovery function network element discovers a first network function network element that can provide a specific service for the second network function network element. Correspondingly, sending the service discovery request message may be understood as triggering a service discovery procedure. The service discovery request message may include a type (namely, the first type) of a network function expected by the second network function network element.

Specifically, the service discovery function network element may be an NRF or a future network element used for a service discovery function, the first type may be session management, the second network function network element may be an AMF, and the network function network element requested to be discovered may be an SMF. For example, the AMF requests, from the NRF, information about an SMF configured to provide a PDU session for a user.

S520: When determining that a first certificate of a first network function network element of the first type is valid, the service discovery function network element sends a service discovery response message including identification information of the first network function network element of the first type.

For example, the service discovery function network element sends, to the second network function network element NFc, the service discovery response message including the identification information of the first network function network element; or the service discovery function network element sends, to the second network function network element through an SCP, the service discovery response message including the identification information of the first network function network element; or the service discovery function network element sends, to the second network function network element through another service discovery function network element, the service discovery response message including the identification information of the first network function network element.

For example, the identification information of the first network function network element may be an NF ID (identity (Identity) or identifier (Identifier)) or an NF instance identifier (Instance ID), and is used to establish a network connection between the second network function network element and the first network function network element subsequently.

Optionally, the service discovery response message includes configuration data (NF Profile) of the first network function network element, for example, a type of an NF (for example, an AMF or an SMF), an identifier of a PLMN to which the NF belongs (for example, a PLMN ID), a slice related identifier (Identifier) (for example, single network slice selection assistance information to which the NF belongs), an NSI ID of a slice instance to which the NF belongs, or location information of the NF. This is not specifically limited in this application.

Specifically, the service discovery function network element determines the first network function network element of the first type based on the first type in the service discovery request message. For a specific implementation, refer to step S412 in the foregoing method 400. For brevity, details are not described herein again. Further, the service discovery function network element determines, based on a validity period of the first certificate, that the first certificate does not expire, and the service discovery function network element determines that the first certificate is not revoked, so as to determine that the first certificate of the first network function network element of the first type is valid.

The service discovery function network element may obtain the validity period of the first certificate by querying an NF context.

That the service discovery function network element determines that the first certificate is not revoked includes the following several implementations.

In a possible implementation, the service discovery function network element locally queries a certificate revocation list (for example, which may be a certificate revocation list (certificate revocation list, CRL) or an online certificate status protocol (online certificate status protocol, OCSP)), and when the first certificate does not belong to the certificate revocation list, the service discovery function network element determines that the first certificate is not revoked.

In another possible implementation, when the service discovery function network element does not find a certificate revocation list locally, the service discovery function network element determines that the first certificate is not revoked.

For example, the certificate revocation list may be preconfigured.

It should be understood that, in this implementation, the certificate revocation list is deployed on the service discovery function network element, and the certificate revocation list lists information about all currently revoked or suspended digital certificates.

In another possible implementation, the service discovery function network element sends a query request message to a server, where the query request message is used to query whether the first certificate is revoked; the service discovery function network element receives a query response message from the server, where the query response message includes an indication that the first certificate is not revoked; and the service discovery function network element determines, based on the indication, that the first certificate is not revoked.

Optionally, the server may be a CRL or OCSP server. For example, the NRF queries a certificate status (whether a certificate is revoked) of an NFp through the CRL or OCSP server. The NRF may interact with the CRL or OCSP server directly or through a proxy network element SCP. This specifically depends on a deployment location (for example, on the NRF or the CRL or OCSP server) of the CRL/OCSP server.

It should be understood that, in this implementation, the certificate revocation list is deployed on an external server, and the certificate revocation list is a list with a timestamp, and includes information about all currently revoked or suspended digital certificates. The certificate revocation list includes two fields: a current update date and a next update date. Based on information about the two dates, a user may determine whether a currently owned certificate revocation list is the latest, and manage a certificate revocation list buffer.

For example, the first certificate further includes one or more of the following: an identifier of a certificate issuing network element that issues the first certificate; an owner identifier of the first certificate; an owner public key of the first certificate; or a certificate signature of the certificate issuing network element.

The following specifically describes a specific implementation in which the service discovery function network element obtains the first certificate.

In a possible implementation, the service discovery function network element receives a registration request message, where the registration request message is used to request to register the first network function network element with the service discovery function network element, the registration request message includes the first certificate, and the first certificate includes identification information of the first certificate and the validity period of the first certificate.

For example, the identification information of the first certificate may be a first certificate ID (identity (Identity) or identifier (Identifier)), indicating identity information of the first certificate.

For example, the service discovery function network element receives the registration request message from a network function service consumer network element; or receives the registration request message from a network function service consumer network element through a proxy network element (for example, an SCP).

It should be noted that, when the service discovery function network element NRF receives the registration request message from the network function service consumer network element NFc through the SCP, the SCP needs to include a certificate of the SCP in a connection establishment request message, to complete bidirectional authentication with the NRF, so as to establish a network connection. Therefore, when the connection is established through the SCP, all certificates of the first network function network element NFp are carried in the registration request message, and are not carried in the connection establishment request message of the SCP.

In this implementation, there may be a plurality of first certificates. For example, when there are a plurality of first certificates, because a network function service producer network element needs to complete bidirectional authentication based on a certificate when establishing a network connection to the service discovery function network element, the connection establishment request needs to carry a certificate. In this case, the first certificate in the registration request message may be all certificates owned by the network function service producer network element, or may be another certificate other than the certificate used to establish a network connection. This is not specifically limited in this application.

In another possible implementation, the service discovery function network element receives a connection establishment request message, where the connection establishment request message is used to request to establish a connection between the first network function network element and the service discovery function network element, the connection establishment request message includes the first certificate, and the first certificate includes identification information of the first certificate and the validity period of the first certificate.

For example, the service discovery function network element receives the connection establishment request message from the first network function network element NFp; or receives the connection establishment request message from the first network function network element NFp through a proxy network element (for example, an SCP).

In this implementation, there may be one first certificate. For example, when there is only one first certificate, because a network function service producer network element needs to complete bidirectional authentication based on a certificate when establishing a network connection to the service discovery function network element. Therefore, the network connection establishment request needs to carry the first certificate. Optionally, the registration request message may carry the first certificate, or may not carry the first certificate. This is not specifically limited in this application.

Further, the service discovery function network element sends the registration response message to notify that the registration request of the first network function network element NFp is accepted, and stores the configuration data of the first network function network element.

In a possible implementation, when determining that the first certificate is valid, the service discovery function network element stores the first certificate as an NFp context in the service discovery function network element; or when determining that the first certificate is valid, the service discovery function network element stores the identification information of the first certificate and the validity period of the first certificate as an NFp context in the service discovery function network element.

In other words, only when determining that the first certificate is valid, the service discovery function network element accepts the registration request of the first network function network element (for example, the NFp), that is, stores the configuration data of the first network function network element, and the first certificate or the identification information of the first certificate and the validity period of the first certificate.

It should be noted that, in the technical solution of this application, the NRF needs to store, as a context of the NF in the NRF, certificate information used to establish a TLS connection between the NF and the NRF.

In another possible implementation, when determining that the first certificate in the registration request message is valid, the service discovery function network element may alternatively not store the first certificate, or may not store the identification information of the first certificate and the validity period of the first certificate. Based on this implementation, when receiving a service used to request to discover the network function network element of the first type, the service discovery function network element may send the identification information of the first network function network element of the first type to an external server, for example, a certificate revocation list server or an online certificate status protocol server, to request to obtain validity of the first certificate (query the validity period and a certificate status of the first certificate). Further, the service discovery function network element determines, based on a response message fed back by the external server, whether to provide the identification information of the first network function network element for the second network function network element NFc. For example, if the external server feeds back that the first certificate is valid, the service discovery function network element provides the identification information of the first network function network element NFp for the second network function network element NFc.

For example, the service discovery function network element sends a message #1 to the certificate revocation list server, where the message #1 includes the identification information (for example, an NFp ID or an NF instance ID) of the first network function network element of the first type, and the message #1 is used to query validity of the first certificate of the first network function network element from the certificate revocation list server. Correspondingly, the certificate revocation list server receives the message #1 from the service discovery function network element, and searches for a certificate corresponding to the NFp based on the NF instance ID. If the server does not find the certificate corresponding to the NFp, it indicates that the first certificate owned by the NFp instance is not revoked; or if the server finds the certificate corresponding to the NFp, it indicates that one or more first certificates owned by the NFp instance are revoked, and an indication that the first certificate of the NFp instance is revoked is returned to the service discovery function network element.

The following specifically describes a specific implementation in which the service discovery function network element determines that the first certificate is valid in a registration request process.

In a possible implementation, the service discovery function network element determines, based on a public key of the first network function network element and a public key of a certificate issuing network element, that the first certificate is a certificate issued by the certificate issuing network element to the first network function network element; the service discovery function network element determines, based on the validity period of the first certificate, that the first certificate does not expire; and the service discovery function network element determines that the first certificate is not revoked.

For example, the public key of the first network function network element and the public key of the certificate issuing network element may be preconfigured by the service discovery function network element, or may be carried in the registration request message. This is not specifically limited in this application.

It should be understood that a public key and a private key are separately used for encryption and digital signature generation. The public key can be sent to a network, and the private key needs to be stored in an owner. In other words, the first network function network element and the certificate issuing network element may separately generate digital signatures for the first certificate by using respective private keys. In an encryption manner, the service discovery function network element may perform decryption verification on encryption protection of the first network function network element and the certificate issuing network element by using the public key of the first network function network element and the public key of the certificate issuing network element. If the verification succeeds, it indicates that the first certificate belongs to the first network function network element, is issued and authenticated by the certificate issuing network element, and is not tampered with by another function entity.

Based on the foregoing implementation, the second network function network element NFc may obtain the identification information of the first network function network element NFp of the first type from the service discovery function network element NRF, and establish a network connection to the first network function network element. In this case, if the first certificate of the first network function network element is invalidated or revoked, network connection establishment fails, and network efficiency is affected.

The following specifically describes how the service discovery function network element manages the certificate and how network function network elements communicate with each other after the service discovery function network element sends the service discovery response message including the identification information of the first network function network element but the first certificate is revoked.

In a possible implementation, the service discovery function network element receives indication information, where the indication information indicates that the first certificate is revoked, and the indication information includes the identification information of the first certificate; and the service discovery function network element sends a notification message, where the notification message notifies that the first certificate of the first network function network element is revoked.

For example, the service discovery function network element may receive the indication information from the certificate issuing network element (when the first certificate is revoked), or may receive the indication information from the second network function network element NFc (when network connection establishment fails).

Optionally, the service discovery function network element receives a subscription request message, where the subscription request message is used to request to subscribe to a certificate status of the first certificate from the service discovery function network element.

For example, the service discovery function network element receives the subscription request message from the second network function network element NFc; or the service discovery function network element receives the subscription request message from the second network function network element NFc through a proxy network element SCP.

As an example rather than a limitation, the service discovery function network element receives the indication information from the certificate issuing network element.

Correspondingly, the certificate issuing network element sends the indication information to a network repository function network element corresponding to the first network function network element.

For example, the certificate issuing network element determines the network repository function network element based on preconfigured information about the network repository function network element corresponding to the first network function network element.

It should be noted that the information about the network repository function network element corresponding to the first network function network element may be sent when the first network function network element NFp requests a certificate from the certificate issuing network element, and stored in the certificate issuing network element. Alternatively, the information about the network repository function network element corresponding to the first network function network element may be a part of content of the first certificate issued by the certificate issuing network element to the first network function network element NFp; or may be preconfigured by a network management network element or a network administrator on the certificate issuing network element.

Optionally, before the certificate issuing network element sends the indication information to the network repository function network element corresponding to the first network function network element, the certificate issuing network element determines, based on an instance identifier of the first network function network element in the first certificate or a certificate revocation list address in the first certificate, that a function network element maintaining the first certificate is the network repository function network element.

Further, the service discovery function network element adds the first certificate to the certificate revocation list based on the indication information.

For example, when the certificate issuing network element revokes the first certificate, the service discovery function network element receives the indication information from the certificate issuing network element, and updates the locally stored certificate revocation list in a timely manner.

Specifically, a reason why the certificate issuing network element revokes the first certificate may be: The certificate issuing network element receives a revocation request sent by another entity, or actively revokes the first certificate. For example, a private key of the first network function network element is leaked. After detecting this security event, a network management system requests the certificate issuing network element to revoke the certificate. Alternatively, because of network maintenance of an operator, a configuration of the first network function network element needs to be updated, and the first certificate is revoked or temporarily suspended.

It should be noted that the indication information may further indicate that the first certificate is revoked, and the indication information includes identification information of the first certificate. In other words, the indication information and indication information that enables a receiver (for example, the network repository function network element NRF) to add the first certificate to the revocation list may be same indication information. This is not specifically limited in this application.

In another possible implementation, the service discovery function network element receives a deregistration request message from the first network function network element; and the service discovery function network element sends a notification message, where the notification message notifies that the first certificate of the first network function network element is invalid.

It should be noted that, in this embodiment of this application, that the certificate is invalid includes that the certificate is invalidated or that the certificate is revoked. That the certificate is invalidated is generally understood as that the validity period of the certificate expires, and that the certificate is revoked is generally understood as that the certificate does not expire, but is revoked due to some reasons (for example, leakage of an NF private key or network management).

For example, the service discovery function network element may receive, from the first network function network element (deregistration request), an indication that the first certificate is invalid. A deregistration reason may be that the first network function network element is destroyed, or may be that the first network function network element needs to register with another service discovery function network element (for example, an NRF) due to a network plan change. This is not limited in this application.

It should be noted that, that the NRF determines the NFp in the service discovery procedure and verifies validity of the certificate of the NFp above is merely an example for description, and should not constitute any limitation on the technical solutions of this application. In other words, the foregoing solution is mainly for a scenario in which the NFc and the network function network element NFp that is of the first type and that the NFc requests the NRF to provide are registered with a same NRF and belong to a same PLMN, and application contexts of the NFc and the NFp are stored in the same NRF.

Similarly, this application is also applicable to the following scenario, that is, the network function network element that is of the first type and that the NFc requests the NRF (for example, an NRF 1) to provide may be discovered and determined by another NRF (for example, an NRF 2). That is, the application contexts of the NFc and the NFp are stored in the NRF 1 and the NRF 2 respectively. Therefore, a quantity of NRFs is not limited in this application.

For the second scenario, a specific step may be as follows: The NFc initiates a service discovery procedure. For example, the NFc sends a service discovery request message to an NRF (namely, the NRF 1) in a VPLMN, where the request message carries a home PLMN ID. The NRF 1 identifies an NRF (hNRF) (namely, the NRF 2) in a home HPLMN based on the home PLMN ID and triggers "NF Discovery" on behalf of the NFc. After determining an NFp, the NRF 2 in the HPLMN queries validity of a certificate of the NFp by using an NF context, and queries a certificate revocation status of the NFp through a CRL or OCSP server. The NRF 2 in the HPLMN may interact with the CRL or OCSP server directly or through a proxy. This specifically depends on a deployment location (for example, on the NRF 2 or a third-party server) of the CRL or OCSP server. The NRF 2 in the HPLMN sends a service discovery response message to the NRF 1 in the VPLMN, where the service discovery response message carries information about the NFp (for example, an NFp instance ID). Then, the NRF 1 in the VPLMN forwards the service discovery response message to the NFc. For a process in which the NRF 2 searches for and discovers the NFp and the NRF 2 verifies the validity of the certificate of the NFp, refer to steps S510 and S520 and steps S421 to S423 in the method 400. For brevity, details are not described herein again.

In other words, the technical solutions of this application are applicable to a non-roaming scenario in which certificate management and communication are described, and are also applicable to a roaming scenario. This is not specifically limited in this application.

Based on the foregoing technical solutions, in this application, the validity of the first certificate of the first network function network element is verified, and information about the first network function network element is provided for the second network function network element when the verification succeeds, so that a case in which network connection establishment fails because the certificate of the first network function network element is invalidated or revoked in a process of establishing a network connection between the first network function network element and the second network function network element can be avoided or reduced, thereby improving network efficiency and user experience.

Optionally, when determining that a first certificate of a third network function network element of the first type is invalid, the service discovery function network element sends the service discovery response message that does not include identification information of the third network function network element.

Optionally, when determining that certificates of all network function network elements of the first type are invalid, the service discovery function network element sends the service discovery response message, to reject to provide the network function network element of the first type.

In conclusion, in the technical solutions of this application, based on an existing service discovery process, certificate revocation status query is combined with the service discovery process, thereby optimizing efficiency of certificate revocation status query. In addition, in the technical solutions of this application, the NRF can be further prevented from continuing to provide the NFp for the NFc after the certificate of the NFp expires or is revoked, which may cause a connection setting failure.

The following uses an example in which an NFp requests service registration from an NRF and an NFc requests service discovery from the NRF. Information about a certificate owned the NFp is provided in a registration procedure of the NFp, and verification on validity of the certificate owned by the NFp is added in a service discovery procedure of the NFc. This avoids a connection establishment failure caused by certificate invalidation of the NFp when the NFc and the NFp establish a TLS connection, and avoids reducing network efficiency.

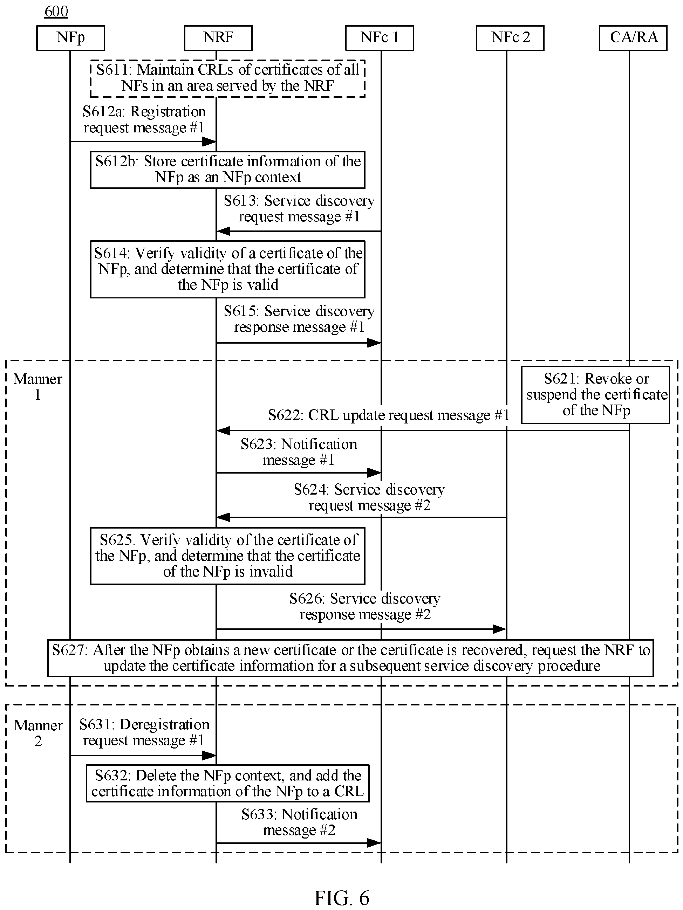

FIG. 6 is an example flowchart of a second communication method 600 according to an embodiment of this application. As shown in FIG. 6, the following plurality of steps are specifically included.

S611: An NRF maintains CRLs of certificates of all NFs in a served area.

It should be noted that, in this implementation, the CRL is stored in the NRF, that is, the NRF may locally query certificate status information of all the NFs in the served area.

S612a: An NFp sends a registration request message #1 to the NRF.

Correspondingly, the NRF receives the registration request message #1 from the NFp.

The registration request message #1 carries a certificate owned by the NFp, and each certificate of the NFp includes a certificate ID and a certificate validity period. For example, the certificate validity period may be an issuance moment and validity duration of the certificate, or may be validity expiration time of the certificate.

Optionally, a certificate of an NFp further includes an ID of a CAissuing the certificate, a signature of the certificate, a certificate owner ID, a certificate owner public key, or the like.

It should be noted that the registration request message #1 includes all certificates owned by the NFp, and a quantity of certificates of the NFp is not limited in this application. For example, the quantity of certificates of the NFp depends on issuance of CAs at different levels, a service type, or the like.

S612b: The NRF stores, as an NFp context in the NRF, the certificate owned by the NFp.

For example, the NRF may store the certificate ID and the certificate validity period of the NFp as the NFp context in the NRF, or the NRF may store all information about all certificates of the NFp as the NFp context in the NRF. This is not specifically limited in this application.

In a possible implementation, after receiving the registration request message #1, the NRF stores the certificate information of the NFp as the NFp context in the NRF.

For example, if the NFp has only one certificate, the registration request message #1 may carry information about the certificate, or may not carry information about the certificate. This is because if the NFp has only one certificate, during TLS connection establishment, the NFp and NRF need to send certificates to each other to verify validity of the two parties, so as to initiate a registration request. In this case, the NRF has obtained the certificate of the NFp. Therefore, the NFp may not include the information about the certificate in the registration request message #1.

For example, if the NFp has a plurality of certificates, the registration request message #1 may carry certificate information of the plurality of certificates, or may not carry information about a certificate used when the NFp establishes a TLS connection to the NRF. This is not limited in this application.

In another possible implementation, after receiving the registration request message #1, the NRF verifies all the certificates of the NFp. For example, the NRF verifies validity (a certificate validity period and a certificate status) of the certificate, verifies authenticity of the certificate (whether the certificate belongs to the NFp), and stores certificate information of the NFp as the NFp context in the NRF after the verification succeeds.

For example, the NRF verifies a signature of a CA on the received certificate of the NFp by using a public key of the CA, and the NRF verifies a signature of the NFp on the received certificate of the NFp by using a public key of the NFp, to determine that the certificate is a certificate issued by the CA to the NFp and the certificate is not tampered with. Further, the certificate information (certificate validity period) in the stored NFp context is queried to determine whether the certificate expires, and whether a certificate status of the NFp in a CRL is revoked is locally queried. When it is determined that the certificate is issued by the CA for the NFp and the certificate is in a valid state (the certificate is within a validity period and the certificate is not revoked or suspended), the NRF stores the certificate ID and the certificate validity period of the NFp as the NFp context in the NRF.

Optionally, in step S612b, the NRF may not store the certificate of the NFp, or may not store the identification information and the validity period of the certificate of the NFp. Based on this implementation, when subsequently receiving a service used to request to discover a network function network element of a first type, the NRF may send identification information of an NFp of the first type to an external server, for example, a certificate revocation list CRL server or an online certificate status protocol OCSP server, to request to obtain validity of a certificate of the NFp (query a validity period and a certificate status of the certificate), so as to provide the identification information of the NFp for the NFc when it is determined that the certificate of the NFp is valid.

In this implementation, validity of the certificate owned by the NFp is verified, so that another malicious NF can be prevented from counterfeiting certificate information for registration, and security is higher. Similarly, the NF may not carry the information about the certificate used when the NF establishes a TLS connection to the NRF.

S613: An NFc 1 sends a service discovery request message #1 to the NRF.

Correspondingly, the NRF receives the service discovery request message #1 from the NFc 1.

The service discovery request message #1 is used by the NFc 1 to request to discover an expected NFp instance, and the service discovery request message #1 includes an expected NFp service name, an NF type of the expected NFp instance, an NF type of the NFc 1, and the like.

S614: The NRF verifies validity of the certificate of the NFp, and determines that the certificate of the NFp is valid, that is, verification on the validity of the certificate of the NFp succeeds.

It should be understood that, before verifying the NFp, the NRF may authorize a discovery request of the NFc 1 based on a profile of an expected NFp or NFp service and a type of the NFc. In addition, refer to step S412 in the method 400 to determine an NFp instance set that matches the service discovery request message #1 and an NRF internal policy.

For example, after determining one or more NFps that can serve the NFc 1, the NRF verifies validity of a certificate of the NFp. Specifically, the NRF queries certificate information (certificate validity period) in the stored NFp context (certificate information) to determine whether the certificate expires, and then locally queries whether a status of the certificate recorded in a CRL is revoked. If all verification succeeds, the NFp is considered to be an NFp instance that can serve the NFc 1. For example, the NFp has only one certificate, and validity expiration time of the certificate is t5. Assuming that a current moment is t1, it indicates that the certificate does not expire. Then, the NRF queries that a status of the certificate in the CRL is non-revoked, it indicates that verification on the certificate of the NFp succeeds, and the NFp can be used as an NFp instance serving the NFc 1.

Optionally, when the NFp has a plurality of certificates, a determining standard is that all certificates of the NFp are verified, or a certificate for serving the NFc 1 is verified. In this case, the NFp can be used as an NFp instance serving the NFc 1.

For example, the NFc 1 is an AMF, the NFp is an SMF, and the SMF has a plurality of certificates, including a TLS client certificate and a TLS server certificate that are used to establish a connection to another NF, and an NE certificate that is used to establish a connection to a UPF. If the AMF requests the NRF to discover an SMF that can be used for a service, and an NE certificate of an SMF found by the NRF expires or is revoked, the NRF may determine, based on a revocation reason or a local policy, whether to provide the SMF for the AMF. For example, if the revocation reason is that a private key of the SMF is leaked, the SMF cannot be provided for the AMF; or if the revocation reason is network maintenance or the NE certificate is temporarily suspended, the SMF can be provided for the AMF.

S615: The NRF sends a service discovery response message #1 to the NFc 1.

Correspondingly, the NFc 1 receives the service discovery response message #1 from the NRF.

The service discovery response message #1 notifies the NFc 1 that the service discovery request succeeds, and the service discovery response message #1 includes information about an NFp instance set, for example, an NFp profile.

For example, when validity of the certificate owned by the NFp is verified, the NRF may provide information about the NFp for the NFc 1, for example, an NFp instance ID and an NF type of the NFp.

It should be noted that for implementations of steps S613 to S615, refer to the foregoing steps S411 to S413. For brevity, details are not described herein again.

Optionally, the NFc 1 sends a subscription request message #1 to the NRF. The subscription request message #1 is used to subscribe to, from the NRF, a certificate status of the NFp provided in step S615. In other words, the subscription request message #1 is used to subscribe to, from the NRF, whether the NFp provided in step S615 is available. In this implementation, it can be ensured that the NFc 1 learns of validity of the certificate of the NFp in real time, thereby avoiding a network establishment failure or a service request failure from the NFp, and avoiding reducing network efficiency and user experience.

For example, the subscription request message #1 and the service discovery request message #1 may be sent to the NRF together, that is, in step S613. Alternatively, the subscription request message #1 may be sent after the NFc 1 receives the NFp information provided by the NRF, that is, after step S615.

The following uses an example to describe how to manage the certificate after the certificate of the NFp is invalidated. Manner 1 is that a CA/RA revokes or suspends the certificate of the NFp, and requests the NRF to update the certificate status of the NFp in the CRL to be invalid (revoked or suspended). Manner 2 is that the NFp actively requests deregistration from the NRF to delete the certificate information of the NFp.

### Manner 1:

S621: The CA/RA revokes or suspends the certificate of the NFp.

For example, the CA/RA receives a revocation request sent by another NF entity. For example, when detecting that the private key of the NFp is leaked, a network management system requests the CA/RA to revoke the certificate of the NFp.

For example, the CA/RA actively revokes the certificate of the NFp. For example, due to network maintenance of an operator, configuration information of the NFp needs to be updated, and therefore, the certificate of the NFp is revoked or temporarily suspended.

S622: The CA/RA sends a CRL update request message #1 to the NRF.

Correspondingly, the NRF receives the CRL update request message #1 from the CA/RA.

The CRL update request message #1 is used to request to update the CRL stored in the NRF.

For example, after revoking the certificate, the CA/RA locates, based on an NFp instance ID or a CRL address in the certificate, a function entity that maintains the certificate CRL, that is, the NRF. Then, the CA/RA sends a CRL update request to the NRF, to request to update the certificate status of the NFp in the CRL on the NRF, for example, revocation or suspension.

Optionally, the CA/RA periodically updates the CRL. For example, the CA/RA updates the CRL once every one hour, one day, or one week. Alternatively, the CA/RA may trigger a CRL update once each time a new certificate is revoked.

Optionally, the CA/RA is preconfigured with indication information used to send the CRL update request message #1 to the NRF.

It should be understood that, based on the CRL update request message #1, the NRF updates the locally stored CRL, that is, adds the certificate of the NFp to the CRL.

S623: The NRF sends a notification message #1 to the NFc 1.

Correspondingly, the NFc 1 receives the notification message #1 from the NRF.

The notification message #1 notifies the NFc 1 that the certificate of the NFp is revoked (invalidated).

For example, after updating the CRL, the NRF may notify, based on the subscription request message #1 received from the NFc 1 in step S613, the NFc 1 that the certificate of the NFp has been revoked (invalidated).

That is, for a plurality of certificates owned by the NFp, if one or more certificates are revoked, it is considered that an entire certificate status of the NFp is invalid, that is, the NFp is unavailable. In this case, the NRF sends the notification message #1 to the NFc.

Optionally, if the certificate of the NFp revoked by the CA in step S622 is only one or more of the plurality of certificates, and the one or more revoked certificates of the NFp are different from the certificate used to serve the NFc 1, the NRF may not perform step S623, that is, the NFp may still be used as an NFp instance for serving the NFc 1.

Based on this implementation, the NRF notifies the NFc 1 that the certificate of the NFp has been revoked, so that the NFc 1 that has performed a service discovery procedure and obtained the information about the NFp does not establish a connection to the NFp to continue communication. This can improve network efficiency and user experience.

S624: An NFc 2 sends a service discovery request message #2 to the NRF.

Correspondingly, the NRF receives the service discovery request message #2 from the NFc 2.

The service discovery request message #2 is used by the NFc 2 to request to discover an expected NFp instance, and the service discovery request message #2 includes an expected NFp service name, an NF type of the expected NFp instance, and an NF type of the NFc 2.

S625: The NRF verifies validity of the certificate of the NFp, and determines that the certificate of the NFp is invalid, that is, verification on the validity of the certificate of the NFp fails.

S626: The NRF sends a service discovery response message #2 to the NFc 2.

Correspondingly, the NFc 2 receives the service discovery response message #2 from the NRF.

The service discovery response message #2 notifies the NFc 2 that the service discovery request fails.

For example, after verification on validity of the certificate owned by the NFp fails, the NRF does not provide the information about the NFp for the NFc 2. For example, the NRF needs to check the certificate validity period and certificate status of the NFp. Because the certificate of the NFp is revoked or suspended in step S621, even if the certificate of the NFp is still within the validity period, verification on the validity of the certificate fails.

It should be noted that, for a specific implementation of steps S624 to S626, refer to the foregoing steps S613 to S615. For brevity, details are not described herein again.

S627: After obtaining a new certificate or the certificate is recovered, the NFp requests the NRF to update certificate information.

For example, if the certificate of the NFp is revoked, the NFp may re-request the CA/RA to issue a certificate. After obtaining the certificate, the NFp may send a registration update message to the NRF, to request to update the certificate information of the NFp. Further, the NFp can be found in a subsequent procedure in which another NF requests service discovery from the NRF.

It should be noted that the registration update message carries information about the new certificate obtained by the NFp. For a specific registration update request procedure, refer to steps S321 to S323 in the method 300. For a specific implementation in which the NFp requests registration from the NRF, refer to the foregoing steps S612a and S612b. For a specific implementation in which the NFp requests the CA/RA to issue a certificate, refer to the technical solution provided in the current standard. This is not specifically limited in this application. For brevity, details are not described herein again.

For example, if the certificate of the NFp is suspended, the NRF may notify the NFc 2 after the certificate suspension is recovered. Alternatively, the NRF may send suspension duration or a suspension time period of the certificate of the NFp to the NFc 2, so that the NFc 2 continues to communicate with the NFp when the certificate suspension is recovered.

### Manner 2:

S631: The NFp sends a deregistration request message #1 to the NRF.

Correspondingly, the NRF receives the deregistration request message #1 from the NFp.

The deregistration request message #1 notifies the NRF that the NFp is unavailable.

For example, a reason why the NFp requests deregistration may be that the NFp is destroyed, or the private key of the NFp is stolen or damaged, or the NFp needs to be registered with another NRF due to a network plan change.

S632: The NRF deletes the NFp context, and adds the certificate information of the NFp to the CRL.

That is, after the NFp is deregistered, the certificate of the NFp is invalidated, and the NRF adds the certificate of the NFp to the CRL.

For example, the NRF performs deregistration processing on the NFp based on the deregistration request message. For example, the NRF deletes the NFp profile and the certificate information of the NFp, and marks the NFp to be unavailable. In addition, the NRF adds the certificate information (for example, the certificate ID and the certificate validity period) of the NFp to the CRL, to indicate that the certificate owned by the NFp is invalidated.

S633: The NRF sends a notification message #2 to the NFc 1.

Correspondingly, the NFc 1 receives the notification message #2 from the NRF.

The notification message #2 notifies the NFc 1 that the NFp has been deregistered or the certificate of the NFp is invalidated.

Based on this implementation, the NRF notifies the NFc 1 that the certificate of the NFp is invalidated, so that the NFc 1 that has performed a service discovery procedure and obtained the information about the NFp does not establish a connection to the NFp to continue communication. This can improve network efficiency and user experience.

It should be noted that, for the foregoing deregistration request procedure, refer to steps S331 to S333 in the method 300. For brevity, details are not described herein again.

It should be understood that the foregoing description is provided by using an example in which network functions belong to a same PLMN, that is, certificate management and communication are described in a non-roaming scenario. However, the technical solutions of this application are also applicable to a roaming scenario, that is, the NFp and the NRF belong to different PLMNs. For a specific implementation, refer to the method 600 and steps S421 to S423 in the method 400. For brevity, details are not described herein again.

According to the method disclosed in this application, the information about the certificate owned the NFp is provided in a registration procedure of the NFp, and verification on validity of the certificate owned by the NFp is added in a service discovery procedure of the NFc for the NFp. This avoids a connection establishment failure caused by certificate invalidation of the NFp when the NFc and the NFp establish a TLS connection, and avoids reducing network efficiency and user experience.

Considering that the CRL in the method 600 is stored in the NRF, after the CRL or OCSP is maintained on the NF, an attacker may initiate an attack during a CRL update interval. Therefore, the following method 700 is proposed. A CRL is deployed on an external CRL server, and an NRF can obtain a certificate status of a certificate (whether the certificate is revoked) of an NFp in real time by exchanging information with the CRL server.

The following uses an example in which an NFp requests service registration from an NRF and an NFc requests service discovery from the NRF. Information about a certificate owned the NFp is provided in a registration procedure of the NFp, and verification on validity of the certificate owned by the NFp is added in a service discovery procedure of the NFc. This avoids a connection establishment failure caused by certificate invalidation of the NFp when the NFc and the NFp establish a TLS connection, and avoids reducing network efficiency.

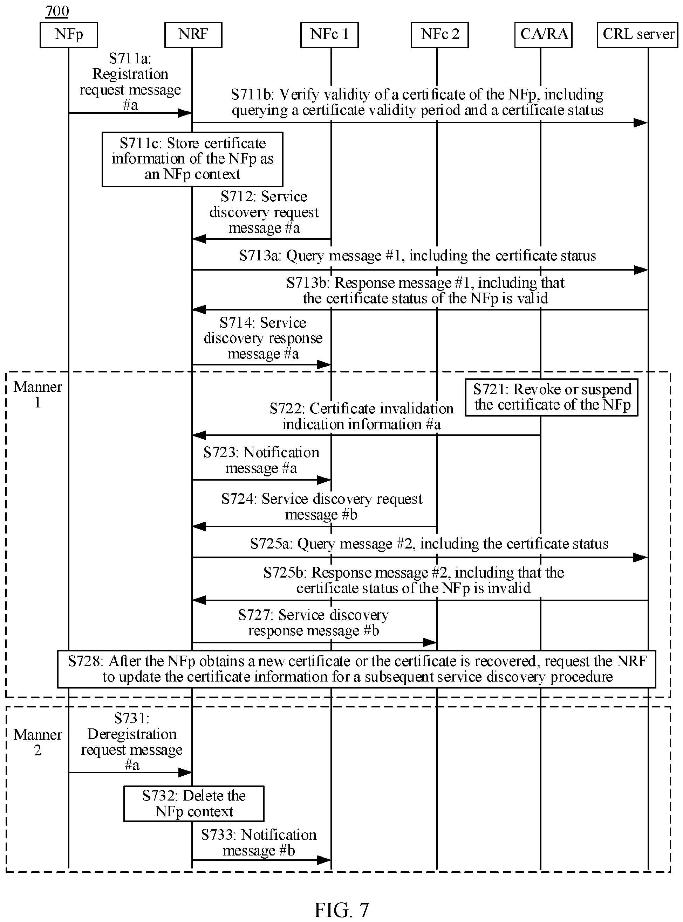

FIG. 7 is an example flowchart of a third communication method 700 according to an embodiment of this application. As shown in FIG. 7, the method includes the following plurality of steps.

S711a: An NFp sends a registration request message #a to an NRF.

Correspondingly, the NRF receives the registration request message #a from the NFp.

The registration request message #a carries a certificate owned by the NFp, and each certificate of the NFp includes a certificate ID and a certificate validity period.

S711b: The NRF verifies validity of the certificate of the NFp.

Specifically, the NRF verifies the validity of the certificate of the NFp, including a certificate validity period, a certificate status, and authenticity of the certificate (whether the certificate belongs to the NFp). For example, for authenticity of the certificate of the NFp, the NRF may verify a signature of the certificate by using public and private keys of the NFp, to ensure that the certificate is a certificate of the NFp. For another example, for verification on the certificate validity period and the certificate status of the NFp, the NRF first checks certificate information (for example, the certificate validity period) of the NFp, determines whether the certificate is within a validity period (that is, determines whether the certificate expires), and then queries a CRL server whether the certificate is revoked. When the certificate of the NFp does not expire and the certificate is not revoked or suspended, the NRF may determine that verification on the validity of the certificate succeeds.

S711c: The NRF stores, as an NFp context in the NRF, information about the certificate owned by the NFp.

For example, after verification on the validity of the certificate of the NFp based on step S711b succeeds, the NRF stores the certificate information (for example, a certificate ID and the certificate validity period) of the NFp in the NRF. Optionally, the NRF may alternatively store all information about all certificates of the NFp in the NRF. In addition, based on the verification in step S711b, the NRF sets a certificate status value of each certificate of the NFp to valid or invalid.

For example, the NRF may add a status value (valid/invalid) to each certificate of the NFp according to a local policy. When the NFp has a plurality of certificates, a determining standard is that all certificates of the NFp are verified, or a certificate for serving an NFc 1 is verified. In this case, the NFp can be used as an NFp instance serving the NFc 1. For example, when a certificate of the NFp is invalidated, the NFp cannot perform communication. In this case, an entire certificate status of the NFp is invalid.

It should be noted that, for a specific implementation of the foregoing steps S711a to S711c, refer to steps S612a and S612b in the method 600. For brevity, details are not described herein again.

S712: An NFc 1 sends a service discovery request message #a to the NRF.

Correspondingly, the NRF receives the service discovery request message #a from the NFc 1.

The service discovery request message #a is used by the NFc 1 to request to discover an expected NFp instance, and the service discovery request message #a includes an expected NFp service name, an NF type of the expected NFp instance, an NF type of the NFc 1, and the like.

S713a: The NRF sends a query message #1 to a CRL server.

Correspondingly, the CRL server receives the query message #1 from the NRF.

The query message #1 is used to query the CRL server for the certificate status of the NFp.

S713b: The CRL server sends a response message #1 to the NRF.

Correspondingly, the NRF receives the response message #1 from the CRL.

The response message #1 includes the certificate status of the NFp. For example, if the certificate status of the NFp is non-revoked, it indicates that the certificate of the NFp is valid.

S714: The NRF sends a service discovery response message #a to the NFc 1.

Correspondingly, the NFc 1 receives the service discovery response message #a from the NRF.

The service discovery response message #a notifies the NFc 1 that the service discovery request succeeds, and the service discovery response message #a includes information about an NFp instance set, for example, an NFp instance ID and an NF type of the NFp.

Optionally, the NFc 1 sends a subscription request message #a to the NRF, to subscribe to the certificate status of the NFp provided by the NRF, or subscribe to whether the NFp provided by the NRF is available.

The following uses an example to describe how to manage the certificate after the certificate of the NFp is invalidated. Manner 1 is that a CA/RA revokes or suspends the certificate of the NFp, and sends a certificate invalidation indication to the NRF, to update the certificate status of the NFp. Manner 2 is that the NFp actively requests deregistration from the NRF to delete the certificate information of the NFp.

### Manner 1:

S721: The CA/RA revokes or suspends the certificate of the NFp.

For a specific implementation, refer to step S612 in the method 600. For brevity, details are not described herein again.

S722: The CA/RA sends certificate invalidation indication information #a to the NRF.

Correspondingly, the NRF receives the certificate invalidation indication information #a from the CA/RA.

The certificate invalidation indication information #a indicates that the certificate of the NFp is revoked or suspended, and the certificate invalidation indication information #a includes the certificate ID of the NFp.

Optionally, in step S722, the CA/RA may alternatively send the certificate of the NFp and a certificate invalidation indication to the NRF.

For example, after revoking the certificate, the CA/RA determines the NRF based on preconfigured information about a network repository function network element to which the NFp belongs, and sends the certificate invalidation indication information #a to the NRF.

The preconfigured information about the network repository function network element to which the NFp belongs may be sent to the CA/RA when the NFp requests a certificate from the CA/RA, or may be stored in the CA/RA, or may be used as a part of content of a certificate issued by the CA/RA to the NFp, or may be preconfigured on the CA/RA by a network management network element or a network administrator. This is not specifically limited in this application.

Optionally, in step S722, the CA/RA may alternatively send the certificate of the NFp and a certificate invalidation indication to the NRF.

S723: The NRF sends a notification message #a to the NFc 1.

Correspondingly, the NFc 1 receives the notification message #a from the NRF.

The notification message #a notifies the NFc 1 that the certificate of the NFp is invalidated.

For example, the NRF sends the notification message #a to the NFc 1 based on the certificate invalidation indication information #a.

Optionally, the NRF notifies, based on the subscription request message #1 received from the NFc 1 in step S714, the NFc 1 that the certificate of the NFp has been revoked or suspended. That is, in this case, the certificate of the NFp is invalidated or the NFp is unavailable, and the NFc does not need to establish a connection to the NFp.

S724: An NFc 2 sends a service discovery request message #b to the NRF.

Correspondingly, the NRF receives the service discovery request message #b from the NFc 2.

The service discovery request message #b is used by the NFc 2 to request to discover an expected NFp instance, and the service discovery request message #b includes an expected NFp service name, an NF type of the expected NFp instance, and an NF type of the NFc 2.

S725a: The NRF sends a query message #2 to the CRL server.

Correspondingly, the CRL server receives the query message #2 from the NRF.

The query message #2 is used to query the CRL server for the certificate status of the NFp.

S725b: The CRL server sends a response message #2 to the NRF.

Correspondingly, the NRF receives the response message #2 from the CRL.

The response message #2 includes the certificate status of the NFp. For example, if the certificate status of the NFp is revoked, it indicates that the certificate of the NFp is invalid.

S727: The NRF sends a service discovery response message #b to the NFc 2.

Correspondingly, the NFc 2 receives the service discovery response message #b from the NRF.

The service discovery response message #b notifies the NFc 2 that the service discovery request fails.

It should be noted that, for a specific implementation of steps S724 to S727, refer to the foregoing steps S712 to S714. For brevity, details are not described herein again.

S728: After obtaining a new certificate or the certificate is recovered, the NFp requests the NRF to update certificate information.

For a specific implementation, refer to step S627 and steps S711a to S711c. For brevity, details are not described herein again.

### Manner 2:

S731: The NFp sends a deregistration request message #a to the NRF.

Correspondingly, the NRF receives the deregistration request message #a from the NFp.

The deregistration request message #a notifies the NRF that the NFp is unavailable.

S732: The NRF deletes the NFp context.

Optionally, the NRF sends the certificate information (for example, the certificate ID and the certificate validity period) of the NFp to an external CRL server, to notify that the certificate of the NFp is invalidated and update the certificate status of the NFp in a CRL. This is different from step S632 in the method 600 in which the certificate information of the NFp is added to the CRL. This is caused by different CRL deployment (NRF or CRL server).

S733: The NRF sends a notification message #b to the NFc 1.

Correspondingly, the NFc 1 receives the notification message #b from the NRF.

The notification message #b notifies the NFc 1 that the NFp has been deregistered or the certificate of the NFp is invalidated.

It should be noted that, for a specific implementation of steps S731 to S733, refer to the foregoing steps S631 to S633. For brevity, details are not described herein again.

It should be understood that the technical solutions of this application are also applicable to a roaming scenario, that is, the NFp and the NRF belong to different PLMNs.

According to the method disclosed in this application, the information about the certificate owned the NFp is provided in a registration procedure of the NFp, and verification on validity of the certificate owned by the NFp is added in a service discovery procedure of the NFc for the NFp. This avoids a connection establishment failure caused by certificate invalidation of the NFp when the NFc and the NFp establish a TLS connection, and avoids reducing network efficiency and user experience.

Based on the method 700, the CA/RA revokes or revokes the certificate of the NFp, and sends the certificate invalidation indication to the NRF. Considering that a CRL list update takes a period of time, there may be a timeliness problem. For example, the certificate of the NFp has been revoked, but the CA does not immediately feed back the certificate status of the NFp to the NRF, but needs to notify the NRF in a next update period. If a network connection is established between the NFc and the NFp in this time period, connection establishment fails, affecting network efficiency. Therefore, the following method 800 is proposed. After network connection establishment fails, an NFc actively reports a certificate invalidation indication of an NFp to an NRF in a timely manner, so that the NRF provides another NFp for the NFc to establish a network connection and provide a service, and the NRF notifies the another NFc that a certificate of the NFp is invalidated, to avoid that an unnecessary network connection establishment failure affects network efficiency.

The following uses an example in which an NFp requests service registration from an NRF and an NFc requests service discovery from the NRF. Information about a certificate owned the NFp is provided in a registration procedure of the NFp, and verification on validity of the certificate owned by the NFp is added in a service discovery procedure of the NFc. This avoids a connection establishment failure caused by certificate invalidation of the NFp when the NFc and the NFp establish a TLS connection, and avoids reducing network efficiency.

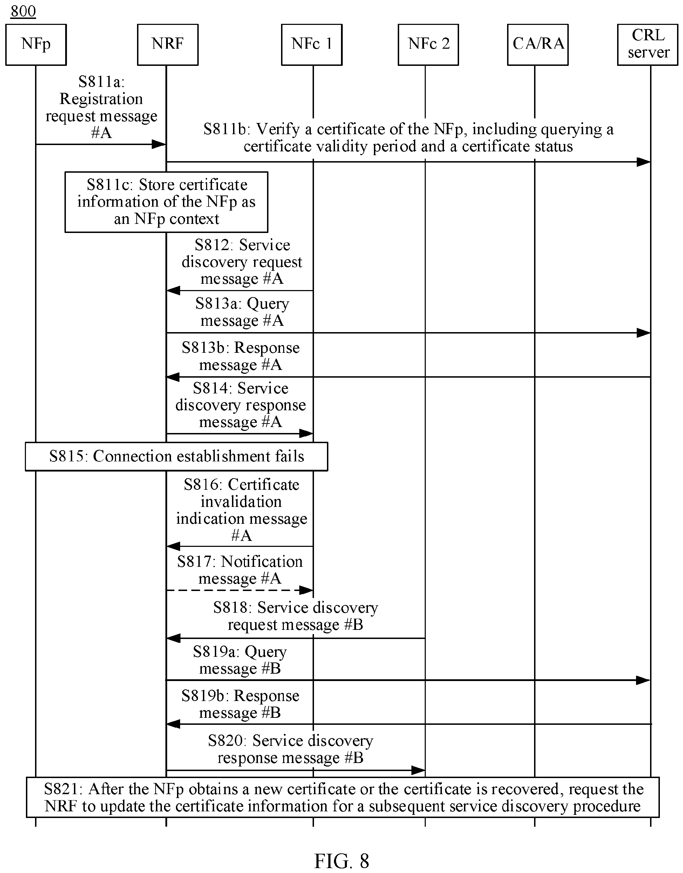

FIG. 8 is an example flowchart of a fourth communication method 800 according to an embodiment of this application. A difference from the method 600 or 700 is that in this implementation, after failing to establish a network connection to an NFp provided by an NRF, an NFc actively reports a certificate invalidation indication of the NFp to the NRF. As shown in FIG. 8, the method includes the following plurality of steps.

S811a: The NFp sends a registration request message #A to the NRF.

Correspondingly, the NRF receives the registration request message #A from the NFp.

The registration request message #A carries certificate information of the NFp, and the certificate information of the NFp includes a certificate ID and a certificate validity period.

S811b: The NRF verifies validity of a certificate of the NFp.

For example, the NRF verifies all certificates of the NFp, including validity (a certificate validity period and a certificate status) of the certificates and authenticity (whether the certificate belongs to the NFp) of the certificates.

S811c: The NRF stores, as an NFp context in the NRF, information about the certificate owned by the NFp.

It should be noted that, for a specific implementation of the foregoing steps S811a to S811c, refer to steps S711a to S711c in the method 700. For brevity, details are not described herein again.

S812: An NFc 1 sends a service discovery request message #A to the NRF.

Correspondingly, the NRF receives the service discovery request message #A from the NFc 1.

The service discovery request message #A is used by the NFc 1 to request to discover an expected NFp instance, and the service discovery request message #A includes an expected NFp service name, an NF type of the expected NFp instance, an NF type of the NFc 1, and the like.

S813a: The NRF sends a query message #A to a CRL server.

Correspondingly, the CRL server receives the query message #A from the NRF.

The query message #A is used to query the CRL server for the certificate status of the NFp.

S813b: The CRL server sends a response message #A to the NRF.

Correspondingly, the NRF receives the response message #A from the CRL.

The response message #A includes the certificate status of the NFp. For example, if the certificate status of the NFp is non-revoked, it indicates that the certificate of the NFp is valid.

S814: The NRF sends a service discovery response message #A to the NFc 1.

Correspondingly, the NFc 1 receives the service discovery response message #A from the NRF.

The service discovery response message #A notifies the NFc 1 that the service discovery request succeeds, and the service discovery response message #A includes information about an NFp instance set, for example, an NFp instance ID and an NF type of the NFp.

It should be noted that, for a specific implementation of steps S812 to S814, refer to steps S712 to S714 in the method 700. For brevity, details are not described herein again.

S815: The NFc 1 fails to establish a connection to the NFp.

For example, based on the information about the NFp instance set provided by the NRF, the NFc 1 attempts to establish a network connection to the NFp. A failure reason may be that the certificate of the NFp has been revoked or invalidated. For example, the certificate of the NFp is revoked or invalidated due to expiration of the validity period of the certificate of the NFp, network maintenance, or leakage of a private key of the NFp, and consequently the NFc 1 fails to establish a connection to the NFp.

S816: The NFc 1 sends certificate invalidation indication information #A to the NRF.

Correspondingly, the NRF receives the certificate invalidation indication information #A from the NFc 1.

The certificate invalidation indication information #A indicates that the certificate of the NFp is revoked or invalidated, and the certificate invalidation indication information #A includes an NFp ID, a certificate ID, or a certificate type.

Optionally, in step S816, the NFc 1 may directly send the certificate of the NFp and the invalidation indication to the NRF.

S817: The NRF sends a notification message #A based on the certificate invalidation indication information #A.

For example, the NRF queries the CRL server for the certificate status of the NFp, to determine whether the certificate of the NFp is revoked. After it is determined that the certificate of the NFp is revoked, the notification message #A is sent to another NFc (for example, an NFc 3), to avoid a failure of interaction when the NFc 3 subsequently establishes a network connection to the NFp or provides a service, thereby avoiding affecting network efficiency.

S818: An NFc 2 sends a service discovery request message #B to the NRF.

Correspondingly, the NRF receives the service discovery request message #B from the NFc 2.

The service discovery request message #B is used by the NFc 2 to request to discover an expected NFp instance, and the service discovery request message #B includes an expected NFp service name, an NF type of the expected NFp instance, and an NF type of the NFc 2.

S819a: The NRF sends a query message #B to the CRL server.

Correspondingly, the CRL server receives the query message #B from the NRF.

The query message #B is used to query the CRL server for the certificate status of the NFp.

S819b: The CRL server sends a response message #B to the NRF.

Correspondingly, the NRF receives the response message #B from the CRL.

The response message #B includes the certificate status of the NFp. For example, if the certificate status of the NFp is revoked, it indicates that the certificate of the NFp is invalid.

S820: The NRF sends a service discovery response message #B to the NFc 2.

Correspondingly, the NFc 2 receives the service discovery response message #B from the NRF.

The service discovery response message #B notifies the NFc 2 that the service discovery request fails.

It should be noted that, for a specific implementation of steps S818 to S820, refer to the foregoing steps S812 to S814. For brevity, details are not described herein again.

Optionally, based on the certificate invalidation indication information #A in step S816, the foregoing steps S819a and S819b may be deleted.

S821: After obtaining a new certificate or the certificate is recovered, the NFp requests the NRF to update certificate information.

For a specific implementation, refer to step S728 in the method 700. For brevity, details are not described herein again.

It should be understood that the technical solutions of this application are also applicable to a roaming scenario, that is, the NFp and the NRF belong to different PLMNs.

According to the method disclosed in this application, the information about the certificate owned the NFp is provided in a registration procedure of the NFp, and verification on validity of the certificate owned by the NFp is added in a service discovery procedure of the NFc. This avoids a connection establishment failure caused by certificate invalidation of the NFp when the NFc and the NFp establish a TLS connection, so that network efficiency can be improved.

In the foregoing methods 600 to 800, the information about the certificate owned by the NFp is provided in the registration procedure of the NFp, and verification on the validity of the certificate owned by the NFp is added in the service discovery procedure of the NFc. Logic and an interaction procedure of a current network function are changed, and complexity is increased. Therefore, the following method 900 is proposed. Based on a case in which a connection between an NFc and an NFp fails to be established in a current technology, service discovery is re-requested from an NRF, and information about the NFp in the establishment failure and a reason for the establishment failure are reported. Relatively, in this implementation, logic of the NRF can be simplified, and a change to an existing standardized system, procedure, and network function (for example, the NRF or the NFp) can be avoided as much as possible.

The following uses an example in which an NFp requests service registration from an NRF and an NFc requests service discovery from the NRF. Information about a certificate owned the NFp is provided in a registration procedure of the NFp, and verification on validity of the certificate owned by the NFp is added in a service discovery procedure of the NFc. This avoids a connection establishment failure caused by certificate invalidation of the NFp when the NFc and the NFp establish a TLS connection, and avoids reducing network efficiency.

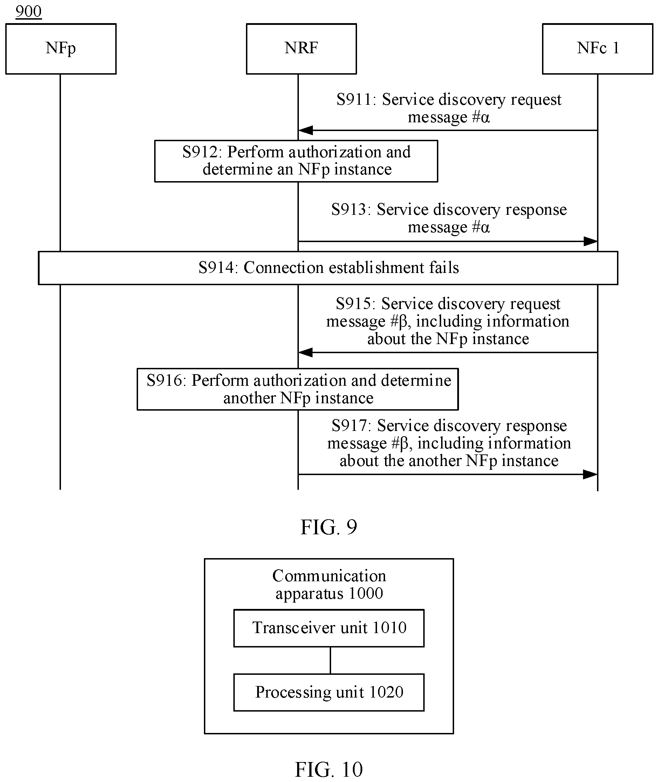

FIG. 9 is an example flowchart of a fifth communication method 900 according to an embodiment of this application. As shown in FIG. 9, the method includes the following plurality of steps.

S911: An NFc 1 sends a service discovery request message #α to an NRF.

Correspondingly, the NRF receives the service discovery request message #α from the NFc 1.

The service discovery request message #α is used by the NFc 1 to request to discover an expected NFp instance, and the service discovery request message #α includes an expected NFp service name, an NF type of the expected NFp instance, and an NF type of the NFc 1.

S912: The NRF performs authorization and determines an NFp instance set.

S913: The NRF sends a service discovery response message #B to the NFc 1.

Correspondingly, the NFc 1 receives the service discovery response message #B from the NRF.

The service discovery response message #B includes information about the NFp instance set, for example, an NFp profile.

It should be noted that for a specific implementation of steps S911 to S913, refer to steps S411 to S413 in the method 400. For brevity, details are not described herein again.

S914: The NFc 1 fails to establish a connection to an NFp.

For example, based on the information about the NFp instance set provided by the NRF, the NFc 1 attempts to establish a network connection to the NFp. A failure reason may be that a certificate of the NFp has been revoked or invalidated. For example, the connection between the NFc 1 and the NFp fails to be established due to expiration of the certificate of the NFp, an NFp routing failure, network maintenance, or leakage of a private key of the NFp.

For example, after failing to establish a connection to the NFp, the NFc may query a CRL to determine that a certificate status of the NFp is revoked, the certificate of the NFp has expired, or the like.

S915: The NFc 1 sends a service discovery request message #β to the NRF.

Correspondingly, the NRF receives the service discovery request message #β from the NFc 1.

The service discovery request message #β includes information about the NFp that fails in connection, for example, an NFp ID and a failure reason.

For example, in step S914, if the NFc fails to establish a connection to one or more NFps in the NFp instance set provided by the NRF, the NFc continues to request the NRF for service discover for an NFp, and includes, in the service discovery request message #β, an ID of the NFp that fails in connection establishment and the failure reason.

S916: The NRF performs authorization and determines another NFp instance set.

For example, the NRF continues to search, for the NFc based on the service discovery request message #β, for another NFp that meets a requirement and that is other than the NFp that fails in connection establishment. For a specific implementation in which the NRF searches for the NFp, refer to step S412 in the method 400. For brevity, details are not described herein again.

S917: The NRF sends a service discovery response message #β to the NFc 1.

Correspondingly, the NFc 1 receives the service discovery response message #β from the NRF.

The service discovery response message #β includes information about another NFp instance set, for example, another NFp profile.

It should be understood that, based on another NFp re-provided by the NRF for the NFc 1, the NFc successfully establishes a connection to the another NFp.

It should be noted that, for a specific implementation of steps S915 to S917, refer to the foregoing steps S911 to S917. For brevity, details are not described herein again.

It should be understood that the technical solutions of this application are also applicable to a roaming scenario, that is, the NFp and the NRF belong to different PLMNs.

According to the method disclosed in this application, the information about the certificate owned the NFp is provided in a registration procedure of the NFp, and verification on validity of the certificate owned by the NFp is added in a service discovery procedure of the NFc. This avoids a connection establishment failure caused by certificate invalidation of the NFp when the NFc and the NFp establish a TLS connection, so that network efficiency can be improved.

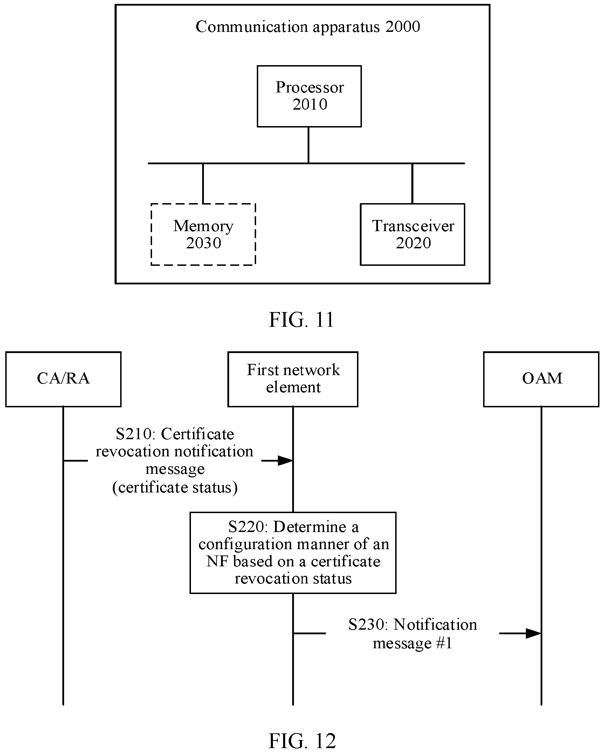

The foregoing describes in detail embodiments on a communication method side in this application with reference to FIG. 1 to FIG. 9. The following describes in detail embodiments on an apparatus side in this application with reference to FIG. 10 and FIG. 11. It should be understood that descriptions of the apparatus embodiments correspond to the descriptions of the method embodiments, and therefore for a part that is not described in detail, refer to the foregoing method embodiments.

FIG. 10 is a block diagram of an apparatus according to an embodiment of this application. As shown in FIG. 10, the apparatus 1000 may include a transceiver unit 1010 and a processing unit 1020. The transceiver unit 1010 may communicate with the outside, and the processing unit 1020 is configured to process data. The transceiver unit 1010 may also be referred to as a communication interface or a transceiver unit.

In a possible design, the apparatus 1000 may implement a step or procedure performed by the service discovery function network element (for example, the NRF) in the foregoing method embodiments. The processing unit 1020 is configured to perform a processing-related operation of the service discovery function network element in the foregoing method embodiments. The transceiver unit 1010 is configured to perform a receiving/sending-related operation of the service discovery function network element in the foregoing method embodiments.

In another possible design, the apparatus 1000 may implement a step or procedure performed by the second network function network element (for example, the NFc) in the foregoing method embodiments. The transceiver unit 1010 is configured to perform a receiving/sending-related operation of the second network function network element in the foregoing method embodiments. The processing unit 1020 is configured to perform a processing-related operation of the second network function network element in the foregoing method embodiments.

In another possible design, the apparatus 1000 may implement a step or procedure performed by the certificate issuing network element (for example, the CA/RA) in the foregoing method embodiments. The processing unit 1020 is configured to perform a processing-related operation of the certificate issuing network element in the foregoing method embodiments. The transceiver unit 1010 is configured to perform a receiving/sending-related operation of the certificate issuing network element in the foregoing method embodiments.

In another possible design, the apparatus 1000 may implement a step or procedure performed by the first network function network element (for example, the NFp) in the foregoing method embodiments. The transceiver unit 1010 is configured to perform a receiving/sending-related operation of the first network function network element in the foregoing method embodiments. The processing unit 1020 is configured to perform a processing-related operation of the first network function network element in the foregoing method embodiments.

It should be understood that the apparatus 1000 herein is embodied in a form of a function unit. The term "unit" herein may refer to an application-specific integrated circuit (application-specific integrated circuit, ASIC), an electronic circuit, a memory and a processor (such as a shared processor, a dedicated processor, or a group of processors) configured to execute one or more software or firmware programs, a combined logic circuit, and/or another suitable component that supports the described function. In an optional example, a person skilled in the art may understand that the apparatus 1000 may be specifically the transmitter in the foregoing embodiments, and may be configured to perform procedures and/or steps corresponding to the transmitter in the foregoing method embodiments; or the apparatus 1000 may be specifically the receiver in the foregoing embodiments, and may be configured to perform procedures and/or steps corresponding to the receiver in the foregoing method embodiments. To avoid repetition, details are not described herein again.

The apparatus 1000 in the foregoing solutions has a function of implementing corresponding steps performed by the transmitter in the foregoing methods, or the apparatus 1000 in the foregoing solutions has a function of implementing corresponding steps performed by the receiver in the foregoing methods. The function may be implemented by using hardware, or may be implemented by using hardware executing corresponding software. The hardware or software includes one or more modules corresponding to the foregoing function. For example, the transceiver unit may be replaced with a transceiver (for example, a sending unit in the transceiver unit may be replaced with a transmitter, and a receiving unit in the transceiver unit may be replaced with a receiver), and another unit such as the processing unit may be replaced with a processor, to separately perform sending and receiving operations and related processing operations in the method embodiments.

In addition, the transceiver unit may alternatively be a transceiver circuit (for example, the transceiver circuit may include a receiver circuit and a transmitter circuit), and the processing unit may be a processing circuit. In embodiments of this application, the apparatus in FIG. 10 may be the receiver or the transmitter in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 11 shows an apparatus 2000 according to an embodiment of this application. As shown in FIG. 11, the apparatus 2000 includes a processor 2010 and a transceiver 2020. The processor 2010 and the transceiver 2020 communicate with each other through an internal connection path. The processor 2010 is configured to execute instructions, to control the transceiver 2020 to send a signal and/or receive a signal.

Optionally, the apparatus 2000 may further include a memory 2030. The memory 2030 communicates with the processor 2010 and the transceiver 2020 through the internal connection path. The memory 2030 is configured to store the instructions. The processor 2010 may execute the instructions stored in the memory 2030.

In a possible implementation, the apparatus 2000 is configured to implement procedures and steps corresponding to the service discovery function network element (for example, the NRF) in the foregoing method embodiments.

In another possible implementation, the apparatus 2000 is configured to implement procedures and steps corresponding to the first network function network element (for example, the NFp) in the foregoing method embodiments.

In another possible implementation, the apparatus 2000 is configured to implement procedures and steps corresponding to the second network function network element (for example, the NFc) in the foregoing method embodiments.

In another possible implementation, the apparatus 2000 is configured to implement procedures and steps corresponding to the certificate issuing network element (for example, the CA/RA) in the foregoing method embodiments.

It should be understood that, the apparatus 2000 may be specifically the transmitter or the receiver in the foregoing embodiments, or may be a chip or a chip system. Correspondingly, the transceiver 2020 may be a transceiver circuit of the chip. This is not limited herein. Specifically, the apparatus 2000 may be configured to perform steps and/or procedures corresponding to the transmitter or the receiver in the foregoing method embodiments.

Optionally, the memory 2030 may include a read-only memory and a random access memory, and provides instructions and data for the processor. A part of the memory may further include a non-volatile random access memory. For example, the memory may further store information about a device type. The processor 2010 may be configured to execute the instructions stored in the memory. When the processor 2010 executes the instructions stored in the memory, the processor 2010 is configured to perform the steps and/or procedures in the foregoing method embodiments corresponding to the transmitter or the receiver.

FIG. 12 is a schematic flowchart of a communication method according to an embodiment of this application. As shown in FIG. 12, the following steps are included.

S210: A CA/RA sends a certificate revocation notification message to a first network element.

In an implementation, the certificate revocation notification message includes identification information of a network function network element NF and indication information that indicates a certificate status of a certificate belonging to the network function network element.

In another implementation, the certificate revocation notification message includes identification information of an NF and a certificate status of a certificate belonging to the NF.

The certificate status of the certificate belonging to the network function network element is statuses of one or more certificates belonging to the NF or a certificate status of a certificate set belonging to the NF. The certificate status indicates that the certificate is invalidated or valid.

Optionally, that the certificate is invalidated further includes two invalidated states: The certificate is revoked or suspended.

S220: The first network element determines a configuration manner of the NF based on the certificate invalidation status of the certificate belonging to the NF.

When the certificate status of the certificate belonging to the NF is invalidated, the first network element determines to perform one of the following configuration manners for the NF: configuring the NF to be deregistered, or identifying the NF to be invalidated.

The first network element is an NRF or a certificate management network element. It may be understood that the first network element may alternatively be an integration of an NRF and a certificate management network element.

S230: The first network element sends a notification message #1 to an OAM.

Correspondingly, the OAM receives the notification message #1 from the first network element.

The notification message #1 is used to send the NF configuration manner determined by the first network element to the OAM.

In an implementation, the notification message #1 includes indication information #1 indicating the NF configuration manner. For example, the indication information #1 may indicate that the certificate status is revoked or suspended.

The following separately describes in detail the two implementations in the embodiment in FIG. 12.

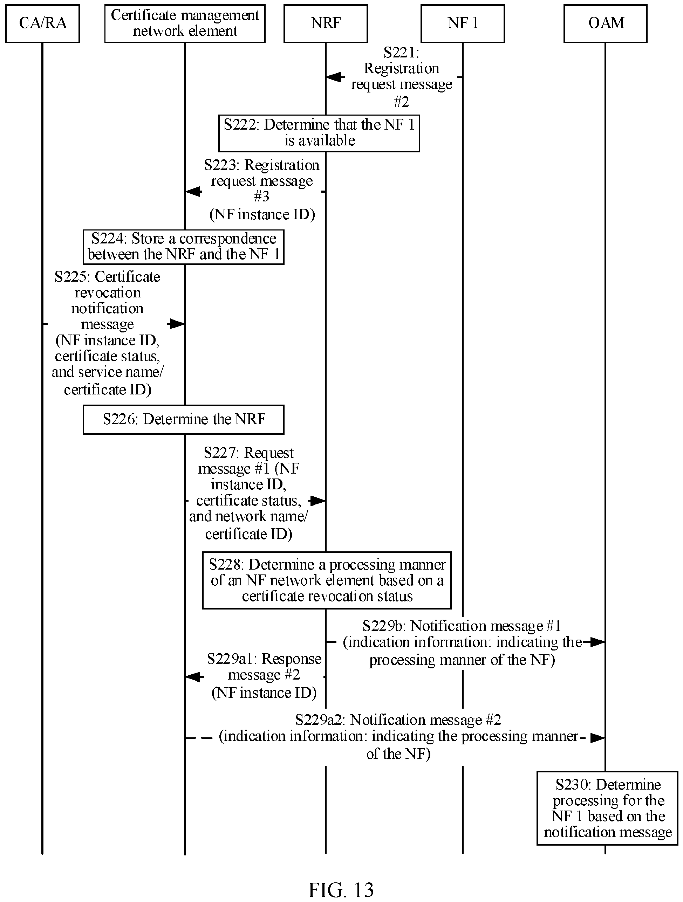

FIG. 13 is a schematic flowchart of a communication method according to an embodiment of this application. As shown in FIG. 13, the following plurality of steps are specifically included.

S221: An NF 1 sends a registration request message #2 to an NRF.

Correspondingly, the NRF receives the registration request message #2 from the NF 1. The NF 1 is a network function service consumer network element.

The registration request message #2 carries a certificate owned by the NF 1, and each certificate of the NF 1 includes a certificate ID and a certificate validity period. For example, the certificate validity period may be an issuance moment and validity duration of the certificate, or may be validity expiration time of the certificate.

Optionally, a certificate of an NFp further includes an ID of a CAissuing the certificate, a signature of the certificate, a certificate owner ID, a certificate owner public key, or the like.

It should be noted that the registration request message #2 includes all certificates owned by the NF 1, and a quantity of certificates of the NF 1 is not limited in this application. For example, the quantity of certificates of the NF 1 depends on issuance of CAs at different levels, a service type, or the like.

S222: The NRF determines that the NF 1 is available.

The NRF receives the registration request message #2 from the NF 1. After the NF 1 is successfully registered and verification performed by the NRF on configuration information of the NF 1 succeeds, the NRF determines that the NF 1 is available.

S223: The NRF sends a registration request message #3 to a certificate management network element.

Correspondingly, the certificate management network element receives the registration request message #3.

The registration request message #3 carries identification information of the NF 1. The identification information may be an NF ID (identity (Identity) or identifier (Identifier)), or an NF instance identifier (NF Instance ID).

Optionally, the registration request message #3 further carries identification information of the NRF corresponding to the NF 1. The identification information of the NRF may be an NRF instance ID.

S224: The certificate management network element stores a correspondence between the NF and the NRF.

The certificate management network element stores the correspondence between the NF 1 and the NRF based on the registration request message #3. For example, there is a one-to-one correspondence between a network function network element and an NRF.

In an implementation, the registration request message #3 carries the NF instance ID and an NRF identifier. After receiving the registration request message #3, the certificate management network element stores the NF instance ID and the NRF ID that are carried in the registration request message #3.

The certificate management network element may receive registration request messages from a plurality of NFs, and each registration request message carries a respective NF instance ID and NRF.

In an implementation, the certificate management network element further stores a certificate ID and usage of a certificate corresponding to the certificate ID. These correspondences may be configured in the certificate management network element by a CA/RA after the certificate is issued, or may be configured in the certificate management network element by the NRF after the NF is successfully registered, or may be preconfigured in the certificate management network element. The certificate management network element may determine usage of a revoked certificate based on the correspondence between a certificate ID and certificate usage.

S225: The CA/RA sends a certificate revocation notification message to the certificate management network element.

Correspondingly, the certificate management network element receives the certificate invalidation notification message.

The certificate revocation notification message notifies the certificate management network element that the certificate is invalidated.

The certificate revocation notification message includes an NF instance ID and a certificate status. The NF instance ID is an identifier of an NF serving the certificate, and the certificate status is one of a certificate revoked state or a suspended state.

Optionally, the certificate invalidation notification further includes a service name or a certificate ID.

The certificate ID identifies the certificate, and certificates identified by different certificate IDs have different usage.

The service name identifies a service corresponding to the certificate. For example, if the service is Namf_Communication, the service name identifies the service associated with the certificate. It may be understood that each service corresponds to one certificate. In an implementation, the certificate invalidation notification includes the service name.

The NF may have a plurality of certificates. Different certificates have different functions, including a certificate dedicated for establishing a TLS connection, a certificate dedicated for signing a client credential assertion (Client Credentials Assertion, CCA), and a certificate dedicated for a slice or a service.

For example, the NF 1 is an AMF, and the AMF may serve a network slice S-NSSAI #1. The AMF obtains, from the CA/RA, a certificate used for the network slice. When UE requests the AMF for registration in the network slice S-NSSAI #1, the AMF initiates a network slice authentication procedure to the network slice. In this case, a service request needs to carry a certificate dedicated for the S-NSSAI #1, and an NSSAA authenticates a certificate #4, to determine that the AMF can serve the network slice. In addition, the AMF may alternatively obtain a certificate dedicated for a service. For example, the AMF may request subscription information of UE from a UDM. In this case, the AMF may use a request to carry a certificate 2 dedicated for requesting a subscription information service. After the UDM successfully authenticates the certificate 2, it is determined that the AMF can obtain the subscription information. For another example, the AMF may request an NSSAAF to perform re-authentication on a network slice. In this case, a request message carries a certificate 3 dedicated for this service. After an NSSAAF successfully authenticates the certificate 3, it is determined that the AMF can initiate a network slice re-authentication service.

In another implementation method, the CA/RA may carry a certificate ID instead of a service name. The certificate ID indicates a revoked certificate in the certificate management network element. The certificate management network element stores the certificate ID and usage of the certificate corresponding to the certificate ID. These correspondences may be configured in the certificate management network element by the CA/RA after the certificate is issued, or may be configured in the certificate management network element by the NRF after the NF is successfully registered, or may be preconfigured in the certificate management network element. The certificate management network element may determine usage of a revoked certificate based on the correspondence between the certificate ID and the certificate.

It can be learned that the certificate ID or the service name carried in the certificate revocation notification message may identify the certificate at a service granularity, to obtain a certificate status at the service granularity.

S226: The certificate management network element determines an NRF that serves an NF corresponding to the certificate.

The certificate management network element determines, based on a stored correspondence between an NF instance ID and an NRF, the NRF corresponding to the NF.

The certificate management network element obtains the NF instance ID based on the received revocation notification message, and determines, based on the NF instance ID, the NRF corresponding to the NF.

S227: The certificate management network element sends a request message #1 to the NRF.

The request message #1 includes indication information for indicating a certificate status. The certificate status is a certificate valid state or a certificate invalidated state. The certificate invalidated state is one of a certificate revoked state or a certificate suspended state.

In an implementation, the request message #1 further includes an NF instance ID and a service name.

In another implementation, the request message #1 further includes an NF instance ID and a certificate ID.

S228: The NRF determines, based on the certificate status, a processing manner of the NF network element serving the certificate.

The NRF receives the request message #1 from the certificate management network element, and determines, based on the certificate status carried in the request message #1, the processing manner of the NF network element serving the certificate. When the indication information indicates that the certificate status is an invalidated state, the NRF determines to perform one of the following processing manners: configuring the NF 1 to be deregistered, or identifying the NF 1 or a service corresponding to the NF 1 to be invalidated.

The following describes several possible implementation solutions with reference to specific implementation examples.

### First implementation solution:

The request message #1 includes an NF instance ID #1 and indication information #1. The indication information #1 indicates that the certificate is in an invalidated state, and the NRF determines, based on the NF instance ID and the indication information #1, that the certificate corresponding to the NF instance ID is in an invalidated state.

In an implementation, after determining that the certificate corresponding to the NF instance ID is in an invalidated state, the NRF sets the NF to be unreachable or invalidated. In this way, when an NF consumer performs an NF discovery procedure and the NRF receives a discovery request from the NF consumer, the NRF does not recommend the NF to the NF consumer. The NF consumer does not establish a connection to the NF, and continues communication. This can improve network efficiency and user experience.

For example, the indication information #1 is a status parameter. When the status parameter is 1, it indicates that the certificate is valid. When the status parameter is 0, it indicates that the certificate is invalidated. For another example, when the status parameter is 00, it indicates that the certificate invalidated state is suspended. When the status parameter is 01, it indicates that the certificate invalidated state is revoked. It may be understood that this is merely an example for description, and this is not limited in this application.

In another implementation, after the NRF determines that the certificate corresponding to the NF instance ID is in an invalidated state, for example, the certificate is in a revoked state, the NRF sets the NF to be deregistered, that is, deletes the certificate corresponding to the NF from the NRF. In this way, the NF is not found by the NF consumer.

### Second implementation solution:

The request message #1 includes an NF instance ID #2, indication information #2, and a service name. The NF instance ID #2 identifies an NF #2, the indication information #2 indicates that a certificate in the NF #2 is invalidated, and the service name identifies a disabled service in the NF #2.

If the request message #1 carries the service name, the NRF determines, based on the service name, to disable a service of the NF 1. For example, if the service name indicates that a revoked certificate is used for S-NSSAI #1, the NRF sets a status of the NF 1 to a state in which the S-NSSAI #1 is invalidated. When an NF consumer searches for an NF that can serve the S-NSSAI #1, the NRF does not recommend the NF 1 to the NF consumer. For example, when the service name indicates that a revoked certificate is used for a service, the NRF sets the status of the NF 1 to a state in which the service indicated by the service name is unavailable.

In this way, a service corresponding to an invalidated certificate can be set to unavailable at a finer granularity, thereby improving network communication efficiency and flexibility.

### Third implementation solution:

The request message #1 includes an NF instance ID #3, indication information #3, and a certificate ID. The NF instance ID #3 identifies an NF #3, and the certificate ID identifies a certificate in the NF #3. The indication information #3 indicates that the certificate corresponding to the certificate ID in the NF #3 is invalidated.

S229a: The NRF sends a response message #2 in response to the request message #1 to the certificate management network element.

The response message #2 carries first indication information. The first indication information indicates the configuration manner that is of the NF network element serving the certificate and that is determined by the NRF in step 228.

S130a: The NRF sends a notification message #2 to the OAM.

The notification message #2 includes the NF instance ID and the indication information #2 for indicating the processing manner determined by the NRF. The indication information #2 indicates that the NF 1 is configured to be deregistered or the NF 1 is identified to be invalidated.

It may be understood that, as an alternative solution of the foregoing steps S229a and S230a, after step S228, optionally, step S229b is performed.

S229b: The NRF sends a notification message #1 to the OAM.

For information included in the notification message #1, refer to the notification message #2. Details are not described herein again.

S230: The OAM determines the processing manner of the NF 1 based on the notification message.

In an implementation, if indication information carried in the notification message #1 indicates that the NF 1 is deregistered, the OAM destroys the NF 1 or initiates a remote measurement procedure to the NF 1.

The remote measurement procedure may measure hardware and software information of the NF 1, to determine security and integrity of the NF 1. After remote measurement is completed, the NF 1 obtains a measurement credential, and the NF 1 may re-apply for a certificate from the CA/RA by using the measurement credential.

In another possible implementation, if indication information carried in the notification message #1 indicates that the NF 1 is identified to be invalidated, the OAM initiates a remote measurement procedure to the NF 1 to obtain a measurement credential, and re-apply for a certificate from the CA/RA based on the measurement credential.

It may be understood that, if the certificate status is a suspended state, when the certificate is recovered, the CA/RA sends a certificate recovery notification to the certificate management network element, where the certificate recovery notification includes the NF instance ID and the certificate ID or the service name. After receiving the certificate recovery notification, the certificate management network element sends the NF instance ID and the service name or the certificate ID to the NRF. After receiving the certificate recovery notification message, the NRF sets the status of the NF 1 to valid or reachable.

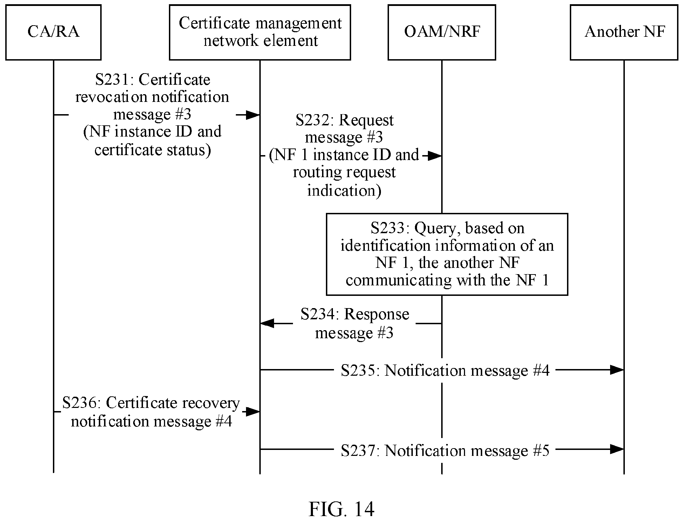

FIG. 14 is a schematic flowchart of a communication method according to an embodiment of this application. As shown in FIG. 14, the following steps are included.

S231: A CA/RA sends a certificate revocation notification message #3 to a certificate management network element.

Correspondingly, the certificate management network element receives the certificate revocation notification message #3. The certificate revocation notification message #3 includes identification information of an NF 1 and a certificate status of a certificate belonging to the NF 1.

For specific implementation of this step, refer to step S221. Details are not described herein again.

S232: The certificate management network element sends a request message #3 to an NRF/OAM.

The certificate management network element determines, based on the received identification information of the NF 1 and the received certificate status, whether to send the request message #3.

When the certificate status of the certificate belonging to the NF 1 is revoked, the certificate management network element sends the request message #3 to the NRF or the OAM. The request message #3 carries the identification information of the NF 1 and routing indication information, and the routing indication information indicates information about another NF that requests to communicate with the NF 1.

S233: The NRF/OAM obtains the information about the another NF that communicates with the NF 1.

In an implementation, if no NRF is deployed in a network, the certificate management network element sends the request message #3 to the OAM, and the OAM determines, based on a stored log (log) associated with the NF 1, information about an NFc that communicates with the NF 1.

In another implementation, if the NRF is deployed in a network, the NRF determines, based on a stored log, for example, a log of a service discovery request, information about an NFc that communicates with the NF 1.

S234: The NRF/OAM sends a response message #3 in response to the request message #3 to the certificate management network element.

The response message #3 is used to send, to the certificate management network element, the information that is about the NFc communicating with the NF 1 and that is obtained in step S233. The response message #3 carries the information about the NFc communicating with the NF 1 and indication information indicating that the certificate belonging to the NF 1 is invalidated.

Correspondingly, the certificate management network element receives the response message #3 from the NRF or the OAM.

It may be understood that there may be one or more NFcs communicating with the NF 1.

S235: The certificate management network element sends a notification message #4 to the NFc communicating with the NF 1.

The notification message #4 notifies the NFc communicating with the NF 1 that the certificate belonging to the NF 1 is invalidated.

The notification message #4 carries the information about the NFc communicating with the NF 1, and the certificate status of the certificate belonging to the NF 1.

It may be understood that another NF in FIG. 14 represents one or more NFs that communicate with the NF 1.

Therefore, after learning that the certificate of the NF 1 is invalidated, the one or more NFs no longer continue to communicate with the NF 1, so that network efficiency can be improved, and user experience can be improved.

S236: When the certificate status is a suspended state, the CA/RA sends a certificate recovery notification message #4 to the certificate management network element.

When the certificate status is the suspended state, after the certificate belonging to the NF 1 is recovered, the CA/RA is triggered to send the certificate recovery notification message #4 to the certificate management network element, to notify the certificate management network element that the certificate belonging to the NF 1 is recovered.

S237: The certificate management network element sends a notification message #5 to another NF.

Correspondingly, the certificate management network element notifies, by using the notification message #5, the another NF that the certificate belonging to the NF 1 is recovered. In this way, the another NF communicating with the NF 1 may communicate with the NF 1 again.

In an implementation process, steps in the foregoing methods can be implemented by using a hardware integrated logic circuit in the processor, or by using instructions in a form of software. The steps of the method disclosed with reference to embodiments of this application may be directly performed by a hardware processor, or may be performed by a combination of hardware and software modules in the processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps of the foregoing method in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logic circuit in the processor, or by using instructions in a form of software. The processor may be a general-purpose processor, a digital signal processor, an application-specific integrated circuit, a field programmable gate array or another programmable logical device, a discrete gate or transistor logic device, or a discrete hardware component. The processor in embodiments of this application may implement or perform the methods, the steps, and the logical block diagrams that are disclosed in embodiments of this application. The general-purpose processor may be a microprocessor, or the processor may be any conventional processor or the like. The steps of the method disclosed with reference to embodiments of this application may be directly performed by a hardware decoding processor, or may be performed by a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps of the foregoing method in combination with hardware of the processor.

It may be understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and not limitation, many forms of RAMs are available, such as a static random access memory (static RAM, SRAM), a dynamic random access memory (dynamic RAM, DRAM), a synchronous dynamic random access memory (synchronous DRAM, SDRAM), double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory for the system and the method described in this specification aims to include but is not limited to these memories and any memory of another appropriate type.

According to the method provided in embodiments of this application, this application further provides a computer program product. The computer program product includes computer program code. When the computer program code is run on a computer, the computer is enabled to perform the method in the foregoing embodiments.

According to the method provided in embodiments of this application, this application further provides a computer-readable medium. The computer-readable medium stores program code. When the program code is run on a computer, the computer is enabled to perform the method in the foregoing embodiments.

A person of ordinary skill in the art may be aware that, in combination with the examples described in embodiments disclosed in this specification, units and algorithm steps may be implemented by electronic hardware or a combination of computer software and electronic hardware. Whether the functions are implemented by hardware or software depends on specific applications and design constraints of the technical solutions. A person skilled in the art may use different methods to implement the described functions for each particular application, but it should not be considered that the implementation goes beyond the scope of this application.

It may be clearly understood by a person skilled in the art that, for convenience and brevity of description, for a specific working process of the foregoing described system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may or may not be physically separate, and parts displayed as units may or may not be physical units, may be located in one place, or may be distributed on a plurality of network units. Some or all of the units may be selected according to an actual requirement to achieve the objectives of the solutions in the embodiments.

In addition, function units in embodiments of this application may be integrated into one processing unit, or each unit may exist alone physically, or two or more units may be integrated into one unit.

When the function is implemented in a form of a software function unit and sold or used as an independent product, the function may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, for example, a USB flash disk, a removable hard disk, a read-only memory, a random access memory, a magnetic disk, or an optical disc.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a service discovery function network element, a service discovery request message, wherein the service discovery request message is used to request the service discovery function network element to provide a network function network element of a first type; and
when determining that a first certificate of a first network function network element of the first type is valid, sending, by the service discovery function network element, a service discovery response message comprising identification information of the first network function network element.

2. The method according to claim 1, wherein the determining that a first certificate of a first network function network element of the first type is valid comprises:
determining, by the service discovery function network element based on a validity period of the first certificate, that the first certificate does not expire; and
determining, by the service discovery function network element, that the first certificate is not revoked.

3. The method according to claim 2, wherein the determining, by the service discovery function network element, that the first certificate is not revoked comprises:
locally querying, by the service discovery function network element, a certificate revocation list; and
when the first certificate does not belong to the certificate revocation list, determining, by the service discovery function network element, that the first certificate is not revoked.

4. The method according to claim 2, wherein the determining, by the service discovery function network element, that the first certificate is not revoked comprises:
sending, by the service discovery function network element, a query request message to a server, wherein the query request message is used to query whether the first certificate is revoked;
receiving, by the service discovery function network element, a query response message from the server, wherein the query response message comprises an indication that the first certificate is not revoked; and
determining, by the service discovery function network element based on the indication, that the first certificate is not revoked.

5. The method according to any one of claims 1 to 4, wherein the method further comprises:
receiving, by the service discovery function network element, a registration request message, wherein the registration request message is used to request to register the first network function network element with the service discovery function network element, the registration request message comprises the first certificate, and the first certificate comprises identification information of the first certificate and a validity period of the first certificate; or
receiving, by the service discovery function network element, a connection establishment request message, wherein the connection establishment request message is used to request to establish a connection between the first network function network element and the service discovery function network element, the connection establishment request message comprises the first certificate, and the first certificate comprises identification information of the first certificate and a validity period of the first certificate.

6. The method according to claim 5, wherein the method further comprises:
when determining that the first certificate is valid, storing, by the service discovery function network element, the first certificate; or
when determining that the first certificate is valid, storing, by the service discovery function network element, the identification information of the first certificate and the validity period of the first certificate.

7. The method according to claim 6, wherein the determining that the first certificate is valid comprises:
determining, by the service discovery function network element based on a public key of the first network function network element and a public key of a certificate issuing network element, that the first certificate is a certificate issued by the certificate issuing network element to the first network function network element;
determining, by the service discovery function network element based on the validity period of the first certificate, that the first certificate does not expire; and
determining, by the service discovery function network element, that the first certificate is not revoked.

8. The method according to any one of claims 1 to 7, wherein after the sending, by the service discovery function network element, a service discovery response message comprising identification information of the first network function network element, the method further comprises:
receiving, by the service discovery function network element, indication information, wherein the indication information indicates that the first certificate is revoked, and the indication information comprises the identification information of the first certificate; and
sending, by the service discovery function network element, a notification message, wherein the notification message notifies that the first certificate of the first network function network element is revoked.

9. The method according to claim 8, wherein the method further comprises:
receiving, by the service discovery function network element, a subscription request message, wherein the subscription request message is used to request to subscribe to a status of the first certificate from the service discovery function network element.

10. The method according to claim 8 or 9, wherein the receiving, by the service discovery function network element, indication information comprises:
receiving, by the service discovery function network element, the indication information from the certificate issuing network element; and
the method further comprises:
adding, by the service discovery function network element, the first certificate to the certificate revocation list based on the indication information.

11. The method according to any one of claims 1 to 10, wherein after the sending, by the service discovery function network element, a service discovery response message comprising identification information of the first network function network element, the method further comprises:
receiving, by the service discovery function network element, a deregistration request message from the first network function network element; and
sending, by the service discovery function network element, a notification message, wherein the notification message notifies that the first certificate of the first network function network element is invalid.

12. The method according to any one of claims 1 to 11, wherein the method further comprises:
when determining that a first certificate of a third network function network element of the first type is invalid, sending, by the service discovery function network element, the service discovery response message that does not comprise identification information of the third network function network element.

13. A communication apparatus, comprising:
a transceiver unit, configured to receive a service discovery request message, wherein the service discovery request message is used to request a service discovery function network element to provide a network function network element of a first type, wherein
when a processing unit determines that a first certificate of a first network function network element of the first type is valid, the transceiver unit is further configured to send a service discovery response message comprising identification information of the first network function network element.

14. The apparatus according to claim 13, wherein
the processing unit is further configured to: determine, based on a validity period of the first certificate, that the first certificate does not expire; and determine that the first certificate is not revoked.

15. The apparatus according to claim 14, wherein
the processing unit is further configured to locally query a certificate revocation list; and
when the first certificate does not belong to the certificate revocation list, the processing unit is further configured to determine that the first certificate is not revoked.

16. The apparatus according to claim 14, wherein
the transceiver unit is further configured to send a query request message to a server, wherein the query request message is used to query whether the first certificate is revoked;
the transceiver unit is further configured to receive a query response message from the server, wherein the query response message comprises an indication that the first certificate is not revoked; and
the processing unit is further configured to determine, based on the indication, that the first certificate is not revoked.

17. The apparatus according to any one of claims 13 to 16, wherein
the transceiver unit is further configured to receive a registration request message, wherein the registration request message is used to request to register the first network function network element with the service discovery function network element, the registration request message comprises the first certificate, and the first certificate comprises identification information of the first certificate and a validity period of the first certificate; or
the transceiver unit is further configured to receive a connection establishment request message, wherein the connection establishment request message is used to request to establish a connection between the first network function network element and the service discovery function network element, the connection establishment request message comprises the first certificate, and the first certificate comprises identification information of the first certificate and a validity period of the first certificate.

18. The apparatus according to claim 17, wherein
when it is determined that the first certificate is valid, the processing unit is further configured to store the first certificate; or
when it is determined that the first certificate is valid, the processing unit is further configured to store the identification information of the first certificate and the validity period of the first certificate.

19. The apparatus according to claim 18, wherein the processing unit is further configured to:
determine, based on a public key of the first network function network element and a public key of a certificate issuing network element, that the first certificate is a certificate issued by the certificate issuing network element to the first network function network element;
determine, based on the validity period of the first certificate, that the first certificate does not expire; and
determine that the first certificate is not revoked.

20. The apparatus according to any one of claims 13 to 19, wherein
the transceiver unit is further configured to receive indication information, wherein the indication information indicates that the first certificate is revoked, and the indication information comprises the identification information of the first certificate; and
the transceiver unit is further configured to send a notification message, wherein the notification message notifies that the first certificate of the first network function network element is revoked.

21. The apparatus according to claim 20, wherein
the transceiver unit is further configured to receive a subscription request message, wherein the subscription request message is used to request to subscribe to a status of the first certificate from the service discovery function network element.

22. The method according to claim 20 or 21, wherein
the transceiver unit is further configured to receive the indication information from the certificate issuing network element; and
the processing unit is further configured to add the first certificate to the certificate revocation list based on the indication information.

23. The apparatus according to any one of claims 13 to 22, wherein
the transceiver unit is further configured to receive a deregistration request message from the first network function network element; and
the transceiver unit is further configured to send a notification message, wherein the notification message notifies that the first certificate of the first network function network element is invalid.

24. The apparatus according to any one of claims 13 to 23, wherein
when the processing unit determines that a first certificate of a third network function network element of the first type is invalid, the transceiver unit is further configured to send the service discovery response message that does not comprise identification information of the third network function network element.

25. A communication method, comprising:
obtaining, by a first network element, a certificate status of a certificate belonging to a network function network element; and
determining, by the first network element, a configuration manner of the network function network element when the certificate status is that the certificate is invalid, wherein the configuration manner is one of the following manners: configuring the network function network element to be deregistered, or identifying the network function network element to be invalid.

26. The communication method according to claim 25, wherein
the first network element obtains, via a certificate revocation notification message, the certificate status of the certificate belonging to the network function network element, wherein the certificate revocation notification message comprises indication information for indicating the certificate status or the certificate status.

27. The communication method according to claim 26, wherein
the obtaining, by a first network element, a certificate status of a certificate belonging to a network function network element comprises:
receiving, by the first network element, the certificate revocation notification message from a certificate issuing network element, wherein the certificate revocation notification message further comprises a network function network element identifier, and the network function network element identifier identifies the network function network element corresponding to the certificate; and
the determining, by the first network element, a configuration manner of the network function network element when the certificate status is that the certificate is invalid comprises:
based on the network function network element identifier, configuring, by the first network element, the network function network element to be deregistered or identifying the network function network element to be invalid.

28. The communication method according to claim 26, wherein
the obtaining, by a first network element, a certificate status of a certificate belonging to a network function network element comprises:
receiving, by the first network element, the certificate revocation notification message from a certificate issuing network element, wherein the certificate revocation notification message further comprises a service name, and the service name identifies a service corresponding to the certificate; and
the identifying, by the first network element, the network function network element to be invalid when the certificate status is that the certificate is invalid comprises:
identifying, by the first network element, the service corresponding to the network function network element to be invalid based on the service name when the certificate status is that the certificate is invalid.

29. The communication method according to claim 26, wherein the certificate revocation notification message further comprises a certificate identity, and the certificate identity identifies the certificate; and
the identifying, by the first network element, the network function network element to be invalid when the certificate status is that the certificate is invalid comprises:
identifying, by the first network element, the certificate corresponding to the function service network element to be invalid based on the certificate identity when the certificate status is that the certificate is invalid.

30. The communication method according to any one of claims 25 to 29, wherein
an invalid state of the certificate is either revoked or suspended.

31. The communication method according to any one of claims 25 to 29, wherein the method further comprises:
sending, by the first network element to an operation, administration and maintenance OAM, the configuration manner determined by the first network element.

32. The communication method according to any one of claims 25 to 29, wherein
the first network element is a service discovery function network element or a certificate management network element.

33. A communication apparatus, comprising:
a unit configured to implement the method according to any one of claims 1 to 12 or claims 25 to 32.

34. A communication apparatus, comprising a processor, wherein the processor is coupled to a memory, and the processor is configured to execute a computer program stored in the memory, to enable the apparatus to perform the method according to any one of claims 1 to 12 or claims 25 to 32.

35. A chip, comprising a processor, configured to invoke a computer program from a memory and run the computer program, to enable a network element device in which the chip is installed to perform the method according to any one of claims 1 to 12 or claims 25 to 32.

36. A computer program, wherein when the computer program is executed by a network element device, the method according to any one of claims 1 to 12 or claims 25 to 32 is implemented.

37. A computer-readable storage medium, wherein the computer-readable storage medium stores a computer program, and when the computer program is run on a computer, the computer is enabled to perform the method according to any one of claims 1 to 12 or claims 25 to 32.
